# EUROPEAN PATENT APPLICATION

(11) **EP 4 340 116 A1**
(43) Date of publication of application: **20.03.2024**
(21) Application number: 22841458.7
(22) Date of filing: 14.07.2022
(51) Int. Cl.: H01M 50/536, H01M 50/528, H01M 50/54, H01M 4/64

(54) **CURRENT COLLECTOR ASSEMBLY, BATTERY CELL, AND BATTERY PACK**

(30) Priority: 14.07.2021 CN 202110798340; 14.07.2021 CN 202110798225; 14.07.2021 CN 202110798108; 14.07.2021 CN 202110798222; 14.07.2021 CN 202121603148 U; 14.07.2021 CN 202121604602 U; 14.07.2021 CN 202121604710 U; 14.07.2021 CN 202121604477 U
(71) Applicant: Xiamen Hithium Energy Storage Technology Co., Ltd., Xiamen, Fujian 361006 (CN)
(72) Inventor: ZHOU, Long, Xiamen, Fujian 361006 (CN); WU, Congmiao, Xiamen, Fujian 361006 (CN); GUO, Min, Xiamen, Fujian 361006 (CN); LAN, Jinhua, Xiamen, Fujian 361006 (CN)
(74) Representative: Manitz Finsterwald Patent- und Rechtsanwaltspartnerschaft mbB
(86) International application number: PCT/CN2022/105695
(87) International publication number: WO 2023/284825

(57) **Abstract**

Provided are a current collector assembly (200), a battery cell (1000), and a battery pack. The current collector assembly (200) includes a plurality of layers of tabs (20211), a protection plate (201), a connection plate (101), and at least one protrusion (1012). The plurality of layers of tabs (20211) is stacked in a thickness direction of each of the tabs (20211). The protection plate (201) is arranged at a side of the plurality of layers of tabs (20211) in the thickness direction of each of the tabs. The connection plate (101) is arranged at another side of the plurality of layers of tabs (20211) in the thickness direction of each of the tabs. The at least one protrusion (1012) is arrange between the connection plate (101) and the protection plate (201). Each of the at least one protrusion (1012) penetrates the plurality of layer of tabs (20211), and is connected to the plurality of layers of tab (20211).

## Description

### PRIORITY INFORMATION

The present application claims priority to Chinese Patent Application No. 202110798340.3, No. 202110798108.X, No. 202110798222.2, No. 202110798225.6, No. 202121603148.6, No. 202121604602.X, No. 202121604710.7, and No. 202121604477.2, filed with China National Intellectual Property Administration on July 14, 2021, the entire contents of which are incorporated herein by reference.

### FIELD

The present disclosure relates to the field of battery technologies, and more particularly, to a current collector assembly, a battery cell, and a battery pack.

### BACKGROUND

In the related art, copper foils are welded at two surfaces of a single layer of a composite tab through ultrasonic roll welding, and the welded copper foils are then welded onto a flexible connector. In this welding manner, each layer of the tab needs to be welded, and therefore welding cost and material cost of the copper foil are increased. After welding, welded parts are susceptible to damage.

### SUMMARY

The present disclosure aims at solving at least a technical problem in the related art. To this end, the present disclosure aims to provide a current collector assembly, a battery cell, and a battery pack. The current collector assembly is ingeniously designed to reduce difficulty of welding tabs and protect the tabs protected from being damaged.

The present disclosure further provides a battery cell.

The present disclosure further provide a battery pack.

A current collector assembly according to one embodiment of the present disclosure includes: a plurality of layers of tabs stacked in a thickness direction of each of the tabs; a protection plate arranged at a side of the plurality of layers of tabs in the thickness direction of each of the tabs; a connection plate arranged at another side of the plurality of layers of tabs in the thickness direction of each of the tabs; and at least one protrusion arranged between the connection plate and the protection plate, each of the at least one protrusion penetrating and being electrically connected to the plurality of layers of tabs.

With the current collector assembly of the present disclosure, by providing the at least one protrusion, difficulty of welding the tabs is lowered. Thus, a welding process of workers is simplified. As a result, a manufacturing time is reduced with lowered labor cost. In addition, connection strength between the tabs and the connection plate is enhanced, and thus the connection is stable. By providing the protection plate, the tabs are protected from being damaged during the welding. Further, by arranging the at least one protrusion and the protection plate, welding strength of the tabs can be ensured, and the tabs can be protected from being damaged, ensuring an overcurrent capability of the tabs.

According to the current collector assembly according to one embodiment of the present disclosure, each of the at least one protrusion has an end connected to the connection plate and another end located inside of an outer side surface of the protection plate.

According to the current collector assembly of the present disclosure, by arranging the protection plate covering the at least one protrusion, a top of the at least one protrusion can be prevented from extending beyond the protection plate, thereby protect the at least one protrusion from being damaged. As a result, a service life of the current collector assembly is prolonged. In addition, connection strength between the tabs and the at least one protrusion is enhanced, and thus the connection is stable. A possibility of separation of the tabs from the at least one protrusion during transportation or using is reduced, which ensures reliability of the battery cell and reduces failure rate. In addition, use safety of the battery pack can be ensured, and occurrence of accidents can be avoided.

In some embodiments, the other end of each of the at least one protrusion is connected to the protection plate.

In some embodiments, the other end of each of the at least one protrusion is fixed to an inner side surface of the protection plate.

In some embodiments, the at least one protrusion is arranged at the connection plate, and each of the at least one protrusion is connected to the protection plate by penetrating the plurality of layers of tabs.

In some embodiments, the at least one protrusion is arranged at the protection plate, and each of the at least one protrusion is connected to the connection plate by penetrating the plurality of layers of tabs.

Further, each of the at least one protrusion has a height ranging from 0.1 mm to 3 mm in the thickness direction of each of the tabs.

Further, the at least one protrusion includes a plurality of protrusions arranged in a matrix pattern.

Further, each of the at least one protrusion extends along a straight and/or curved line in a plane perpendicular to the thickness direction of each of the tabs.

Furthermore, the plurality of protrusions are connected to the plurality of layers of tabs through ultrasonic welding, and the plurality of protrusions are arranged more densely in an ultrasonic vibration direction than in other directions.

Furthermore, each of the tabs includes a support insulation layer; and a first conductive layer and a second conductive layer that respective cover two side surfaces of the support insulation layer in a thickness direction of the support insulation layer.

A current collector assembly according to one embodiment of the present disclosure includes a conductive connection assembly. The conductive connection assembly includes the protection plate and the connection plate. The connection plate and/or the protection plate are provided with the at least one protrusion. Each of the at least one protrusion pierces the plurality of layers of tabs through high frequency vibration and is electrically connected to the plurality of layers of tabs. The high frequency vibration has a frequency ranging from 15 KHz to 40 KHz.

With the current collector assembly of the present disclosure, each of the at least one protrusion can pierce the plurality of layers of tabs through the high frequency vibration. The high frequency vibration acts on a contact surface of an object to be welded, to allow surfaces of the two objects to rub against each other to generate heat, thereby generating a fusion between molecular layers, which in turn improves a welding speed between the at least one protrusion and the plurality of layers of tabs. Therefore, a stable connection between the tabs and the connection plate can be ensured, thereby prolonging the service life of the current collector assembly.

In some embodiments, the high frequency vibration has an amplitude ranging from 5 µm to 100 µm.

In some embodiments, each of the at least one protrusion extends on a surface of the connection plate or the protection plate, and a high frequency vibration direction is parallel to an extending direction of each of the at least one protrusion.

In some embodiments, the high frequency vibration is generated through ultrasonic welding.

In some embodiments, the connection plate is provided with the at least one protrusion. Each of the at least one protrusion has an end connected to the connection plate and another end connected to the protection plate. The at least one protrusion arranged at the connection plate pierces the plurality of layers of tabs through the high frequency vibration, and is electrically connected to the plurality of layers of tabs.

Further, the other end of each of the at least one protrusion is fixed to an inner side surface of the protection plate or arranged in the protection plate through the ultrasonic welding.

Further, the protection plate is provided with the at least one protrusion, and the at least one protrusion arranged at the protection plate is connected to the connection plate by piercing the plurality of layers of tabs through the high frequency vibration.

Further, the at least one protrusion includes a plurality of protrusions arranged in a matrix pattern, and the connection plate and/or the protection plate are provided with the plurality of protrusions.

Further, the plurality of protrusions are arranged more densely in the high frequency vibration direction than in directions other than the high frequency vibration direction.

Furthermore, the plurality of protrusions extend in the high frequency vibration direction and are arranged at intervals in a direction perpendicular to the high frequency vibration direction.

A current collector assembly according to one embodiment of the present disclosure includes a conductive connection assembly. The conductive connection assembly includes a protection plate and a connection plate. The connection plate and/or the protection plate are provided with at least one protrusion. Each of the at least one protrusion includes a connection segment and a piercing segment connected to each other in a height direction of each of the at least one protrusion. The connection segment has an end connected to the connection plate or the protection plate and another end connected to the piercing segment. The piercing segment is configured to pierce the plurality of layers of tabs. Each of the at least one protrusion is electrically connected to the plurality of layers of tabs.

With the current collector assembly of the present disclosure, by arranging the at least one protrusion having the piercing segment at the current collector assembly, a piercing end can easily pierce the plurality of layers of tabs, and thus welding energy can easily pass through the connection plate and the plurality of layers of tabs. In this way, the difficulty of welding the tabs is reduced, and the welding process of the workers is simplified. The manufacturing time is reduced with lowered labor costs. Therefore, the service life of the current collector assembly can be prolonged.

In some embodiments, the connection segment has constant cross sectional areas, and the connection segment is electrically connected to the plurality of layers of tabs.

In some embodiments, the piercing segment has a shape of a cone or a truncated cone.

In some embodiments, each of the at least one protrusion extends on a surface of the connection plate or the protection plate along a straight and/or curved line, and a cross section of the piercing segment perpendicular to an extending direction of each of the at least one protrusion has a shape of a triangle or a trapezoid.

In some embodiments, cross sectional areas of the piercing segment gradually decrease in the height direction of each of the at least one protrusion, and an apex angle of the piercing segment is less than or equal to 120°.

Further, in the height direction of each of the at least one protrusion, a height of the piercing segment is less than or equal to 2 mm.

Further, a smooth transition is formed between the connection segment and the piercing segment.

Furthermore, the at least one protrusion includes a plurality of protrusions arranged in a matrix pattern, and the connection plate and/or the protection plate are provided with the plurality of protrusions.

In a current collector assembly according to one embodiment of the present disclosure, the at least one protrusion includes at least one first protrusion and at least one second protrusion. The at least one first protrusion is arranged at the protection plate. Each of the at least one first protrusion penetrates the plurality of layers of tabs, and is electrically connected to the plurality of layers of tabs. The at least one second protrusion is arranged at the connection plate. Each of the at least one second protrusion penetrates the plurality of layers of tabs and be electrically connected to the plurality of layers of tabs.

With the current collector assembly of the present disclosure, by arranging the protrusions at both the protection plate and the connection plate, the connection strength between the tabs and the protrusions is further enhanced, and thus the connection is stable. Further, piercing effect of the protrusions is ensured, and contact areas between the protrusions and the tabs is increased. In addition, reliability of the conductive connection is stable, and a failure rate is reduced, thereby ensuring a yield rate of the battery cell. In addition, use safety of the battery pack is ensured, which can avoid the occurrence of accidents.

In some embodiments, the protection plate is provided with a plurality of first protrusions arranged at intervals in a plane where the protection plate is located. The connection plate is provided with a plurality of second protrusions arranged at intervals in a plane where the connection plate is located.

In some embodiments, in a plane perpendicular to the thickness direction of each of the tabs, one second protrusion is arranged between at least one set of two adjacent first protrusions, or one first protrusion is arranged between at least one set of two adjacent second protrusions.

In some embodiments, the plurality of first protrusions and the plurality of second protrusions are alternatively arranged in the plane perpendicular to the thickness direction of each of the tabs.

In some embodiments, each of the at least one first protrusion is connected to the connection plate by penetrating the plurality of layers of tabs, and each of the at least one second protrusion is connected to the protection plate by penetrating the plurality of layers of tabs.

In some embodiments, the connection plate has a first surface facing away from the tabs in a thickness direction of the connection plate. The protection plate has a second surface facing away from the tabs in a thickness direction of the protection plate. Two ends of each of the at least one first protrusion in the thickness direction of each of the tabs and two ends of each of the at least one second protrusion in the thickness direction of each of the tabs are located at an inner side of the first surface and an inner side of the second surface.

Further, each of the at least one first protrusion or each of the at least one second protrusion includes a connection segment and a piercing segment connected to each other in a height direction. The connection segment has an end connected to the connection plate or the protection plate and another end connected to the piercing segment. The piercing segment is configured to pierce the plurality of layers of tabs.

Further, the connection segment has constant cross sectional areas and is electrically connected to the plurality of layers of tabs.

Furthermore, the current collector assembly includes an electrode plate. The electrode plate includes a current collector and a plurality of tabs stacked together. The electrode plate includes a support insulation layer, and a first conductive layer and a second conductive layer that cover two side surfaces of the support insulation layer in a thickness direction of the support insulation layer.

A battery cell according to one embodiment of the present disclosure includes the current collector assembly according to any one of the above embodiments of the present disclosure.

With the battery cell of the present disclosure, by arranging the current collector assembly according to the above embodiments to the battery cell, difficulty of assembling the battery cell is reduced. A manufacturing time of the battery cell can be reduced with lowered labor costs. Therefore, reliability of the battery cell can be ensured.

According to the battery pack of one embodiment of the present disclosure, the battery pack includes the battery cell according to the above embodiment.

With the battery pack of the present disclosure, by providing the battery cell according to the above embodiment, a safety performance of the battery pack is improved, and reliability of the battery pack is ensured, thereby avoiding an occurrence of danger.

Additional aspects will be set forth in part in the description which follows and, in part, will be apparent from the description, or may be learned by practice of the presented embodiments.

### BRIEF DESCRIPTION OF THE DRAWINGS

The above and/or additional aspects and advantages of the present disclosure will become more apparent and more understandable from the following description of embodiments taken in conjunction with the accompanying drawings, in which:
FIG. 1 is a schematic view of a current collector assembly according to one embodiment of the present disclosure.
FIG. 2 is a schematic side view of the current collector assembly shown in FIG. 1.
FIG. 3 is a schematic view of a connection plate shown in FIG. 1.
FIG. 4 is a schematic side view of the connection plate shown in FIG. 3.
FIG. 5 is a partial enlarged view of protrusions shown in FIG. 4.
FIG. 6 is a schematic view of a connection plate according to another embodiment shown in FIG. 1.
FIG. 7 is a schematic view of a connection plate according to another embodiment shown in FIG. 1.
FIG. 8 is a schematic view of a connection plate shown in FIG. 1, and each of protrusions has a shape of a cone.
FIG. 9 is a schematic side view of the connection plate shown in FIG.8.
FIG. 10 is a schematic view of a connection plate according to another embodiment shown in FIG. 1.
FIG. 11 is a schematic side view of the connection plate shown in FIG. 10.
FIG. 12 is a schematic view of a connection plate including a connection segment and a piercing segment shown in FIG. 1.
FIG. 13 is a schematic side view of the connection plate shown in FIG. 12.
FIG. 14 is a schematic view of a connection plate shown in FIG. 1 with each of the protrusions has a shape of a pyramid.
FIG. 15 is a schematic side view of the connection plate shown in FIG. 14.
FIG. 16 is a schematic view of a connection plate according to an exemplary embodiment shown in FIG. 1.
FIG. 17 is a schematic side view of the connection plate shown in FIG. 16.
FIG. 18 is a schematic side view of the current collector assembly shown in FIG. 16.
FIG. 19 is a schematic view of a battery cell according to one embodiment of the present disclosure.
FIG. 20 is a schematic view of a current collector assembly shown in FIG. 19.
FIG. 21 is a schematic view of a connection plate shown in FIG. 19.
FIG. 22 is a schematic top view of a connection plate shown in FIG. 20.
FIG. 23 is a schematic view of a battery cell according to another embodiment.
FIG. 24 is a schematic view of the current collector assembly shown in FIG. 23.
FIG. 25 is a schematic view of a connection plate shown in FIG. 23.
FIG. 26 is a schematic top view of the connection plate shown in FIG. 25.
FIG. 27 is a schematic view of a battery cell according to another embodiment.
FIG. 28 is a schematic view of a current collector assembly shown in FIG. 27.
FIG. 29 is a schematic view of the connection plate shown in FIG. 27.
FIG. 30 is a schematic top view of the connection plate shown in FIG. 29.
FIG. 31 is a schematic view of a current collector.
FIG. 32 is a schematic side view of the current collector assembly shown in FIG. 1.
FIG. 33 is a schematic view of a current collector assembly with at least one first protrusion being formed on a protection plate.
FIG. 34 is a schematic side view of the current collector assembly shown in FIG. 33.
FIG. 35 is a schematic view of a protection plate shown in FIG. 34.

### Reference Signs:

100, conductive connection assembly; 101, connection plate 101;
1012, protrusion; 10121 connection segment; 10122, piercing segment;
31, first protrusion; 32, second protrusion;
200, current collector assembly; 201 protection plate;
202, current collector; 2021, electrode plate; 20211, tab;
202111, first conductive layer; 202112, second conductive layer; 202113, support insulation layer;
1000, battery cell.

### DETAILED DESCRIPTION

The embodiments of the present disclosure will be described in detail below with reference to examples thereof as illustrated in the accompanying drawings, throughout which same or similar elements are denoted by same or similar reference numerals. The embodiments described below with reference to the drawings are illustrative only, and are intended to explain, rather than limiting, the present disclosure.

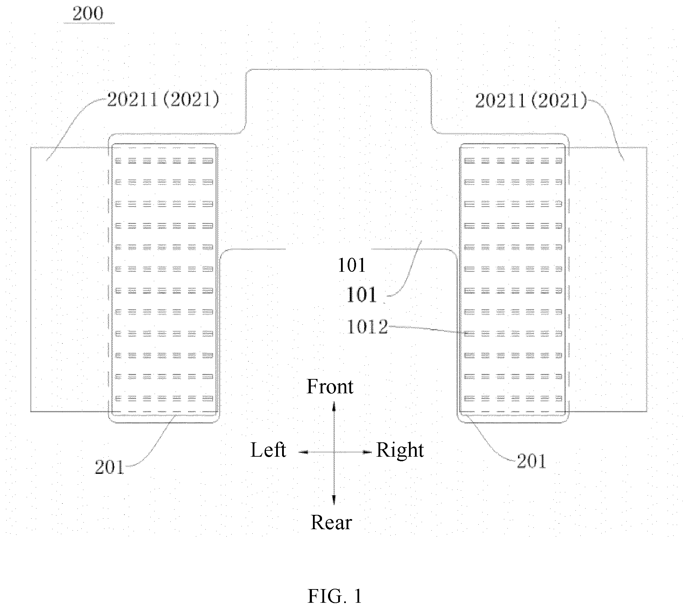

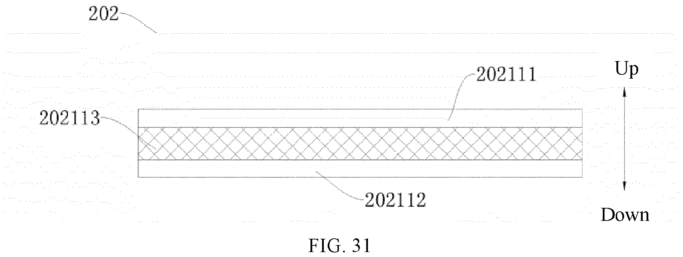

A current collector assembly 200 according to an embodiment of the present disclosure will be described below with reference FIG. 1 and FIG. 31.

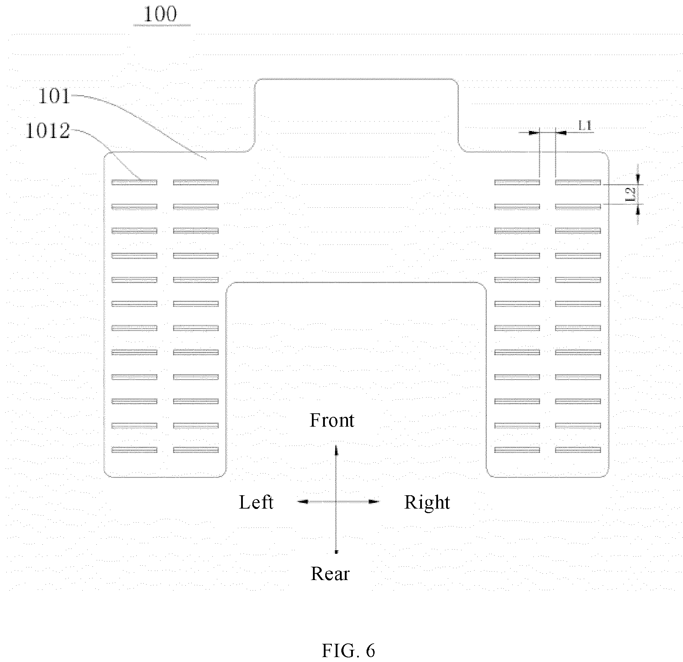

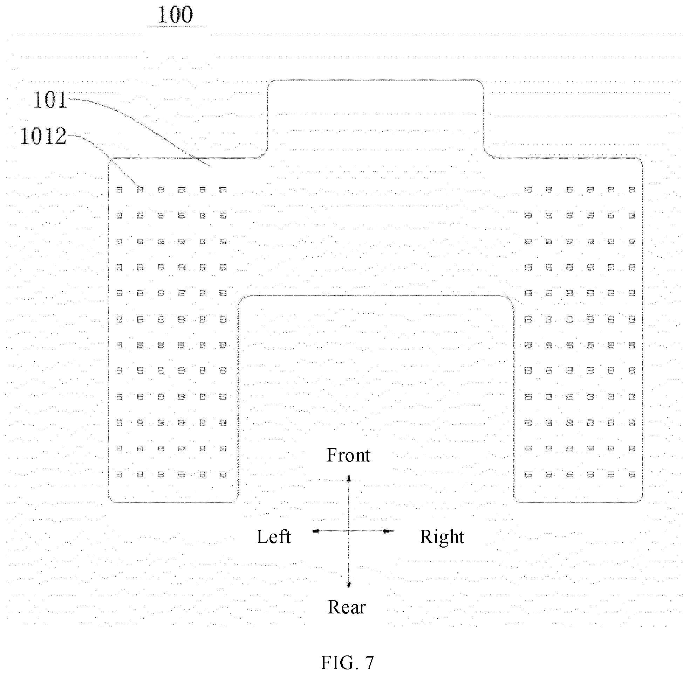

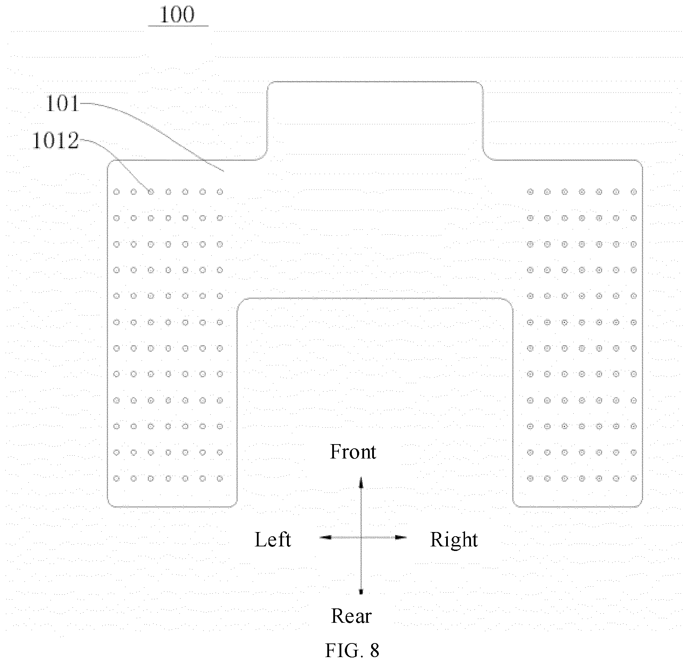

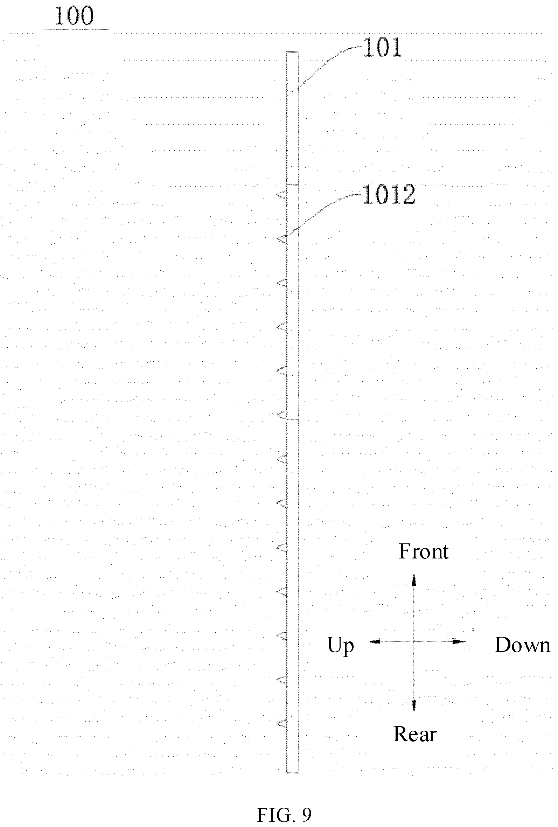

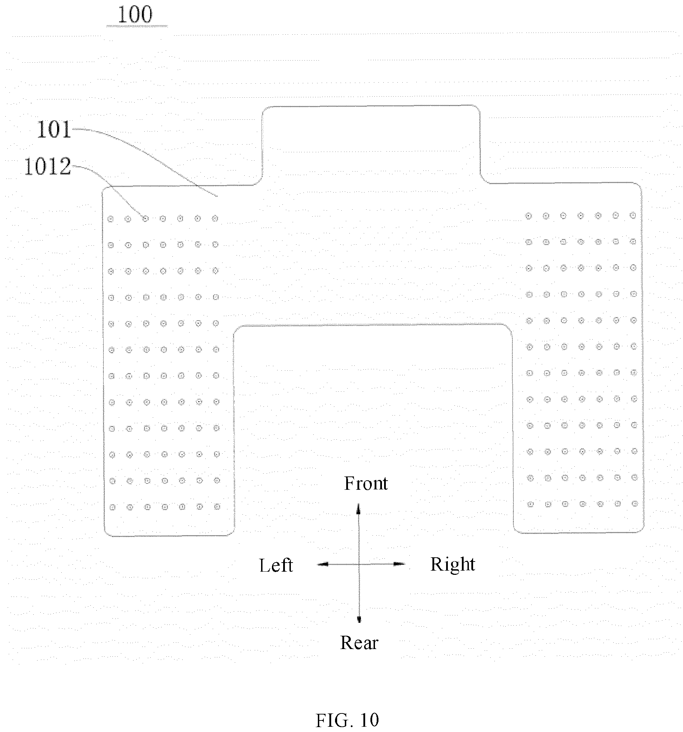

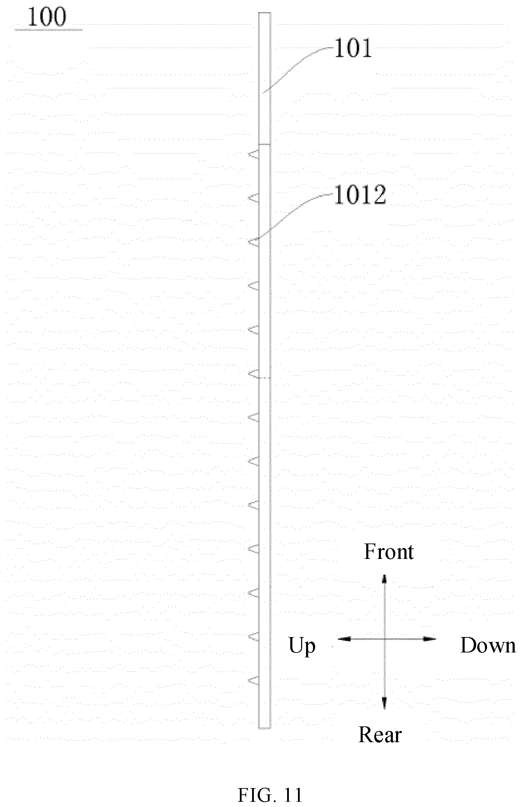

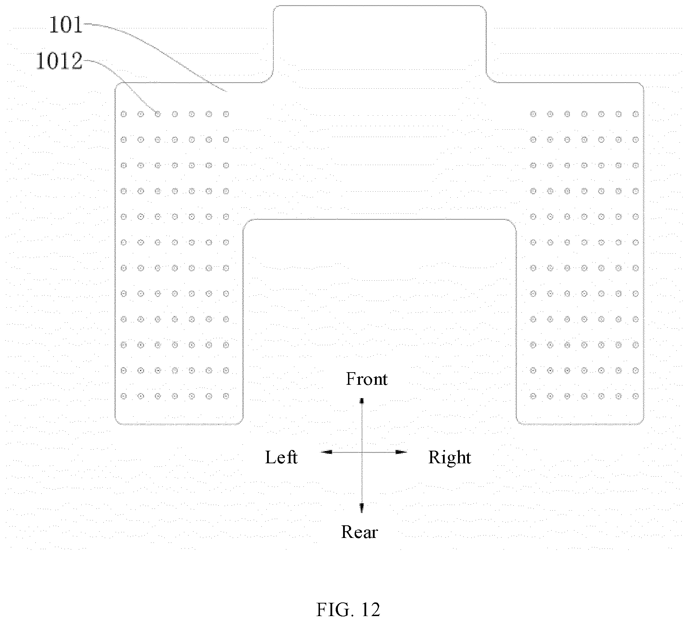

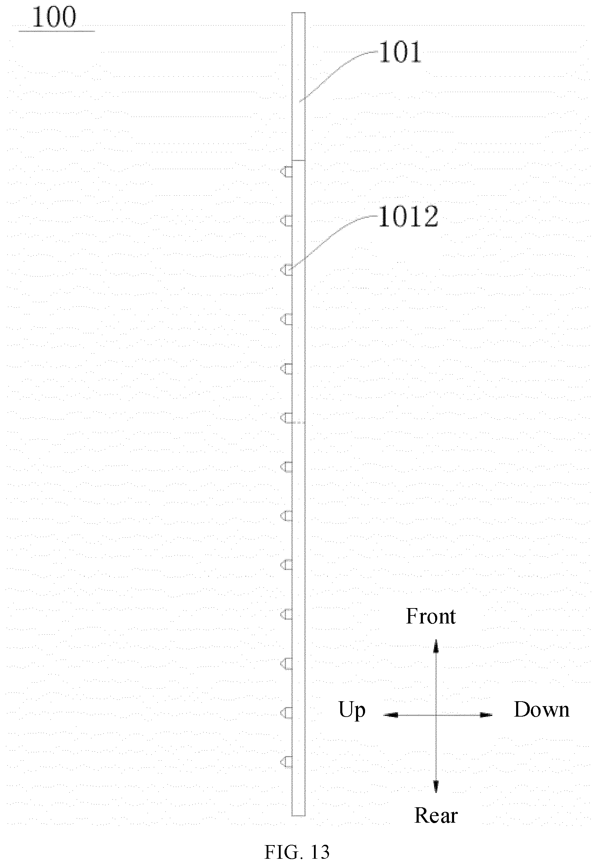

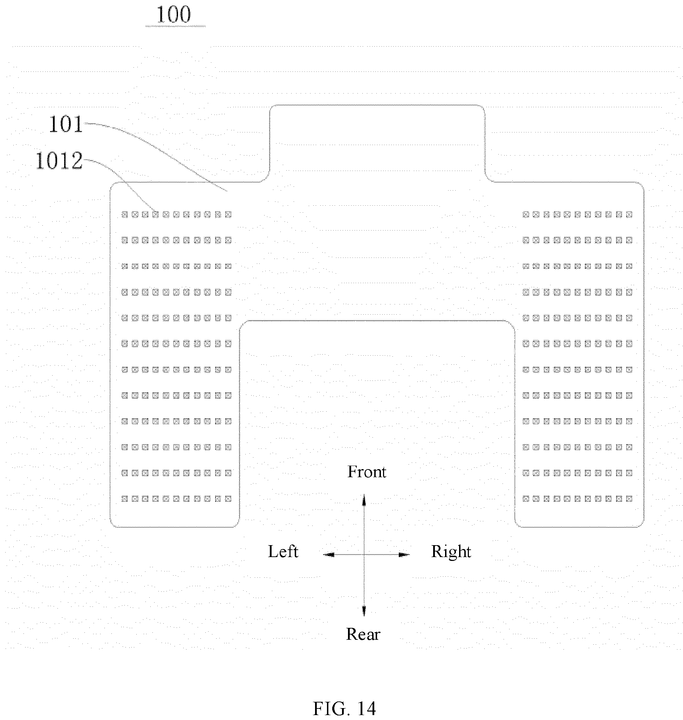

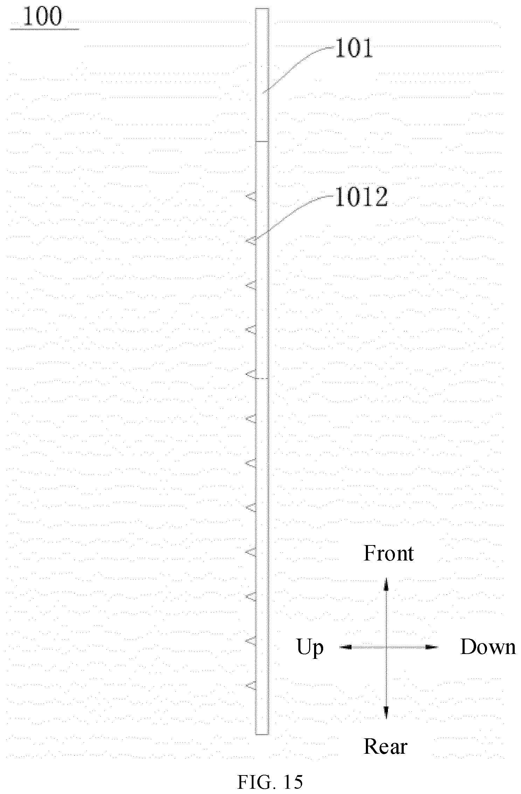

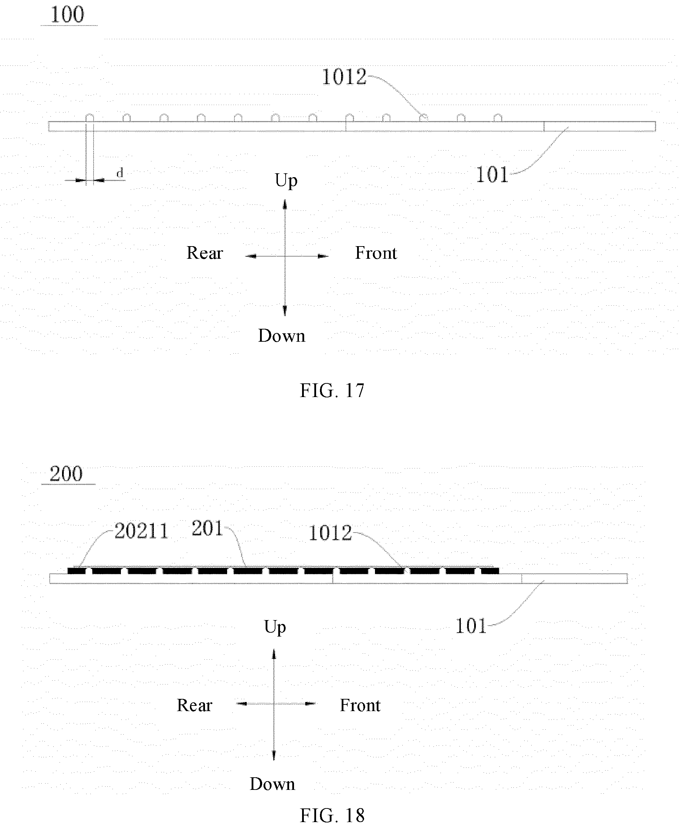

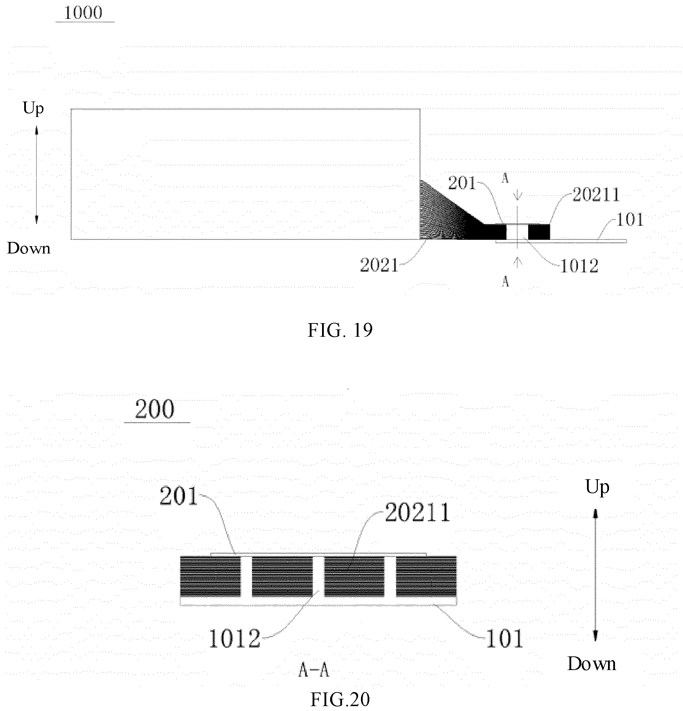

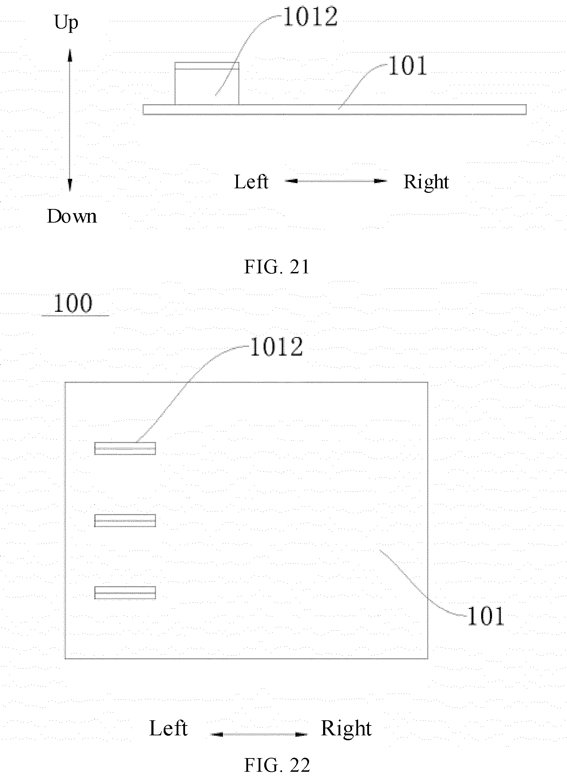

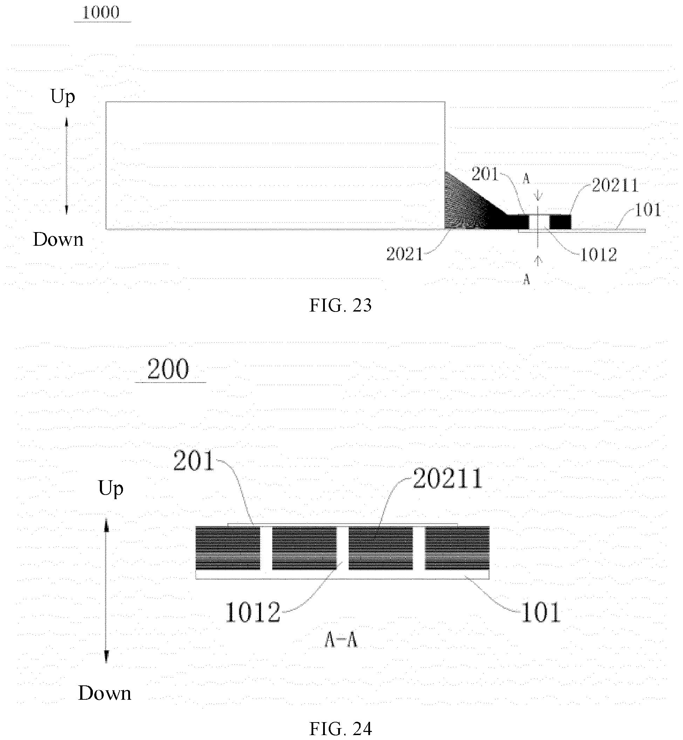

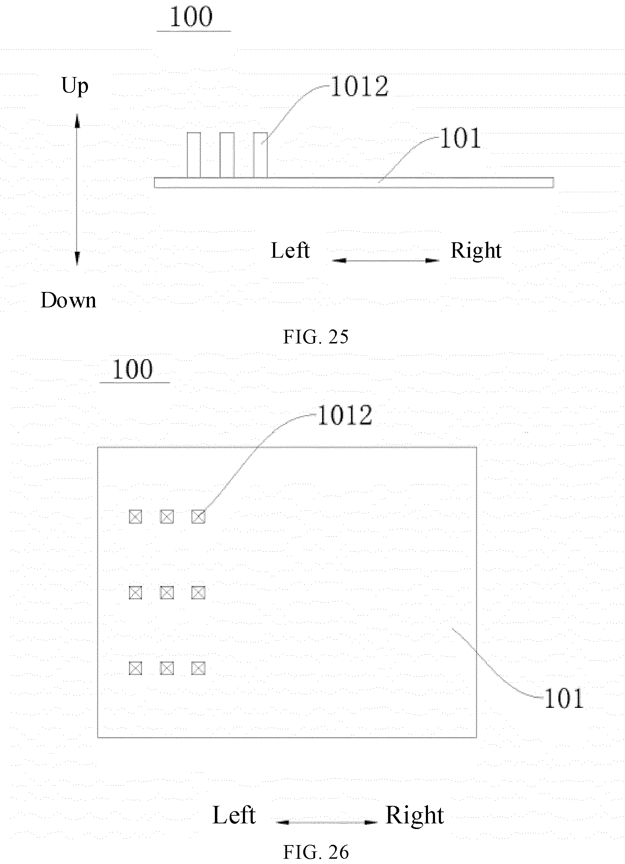

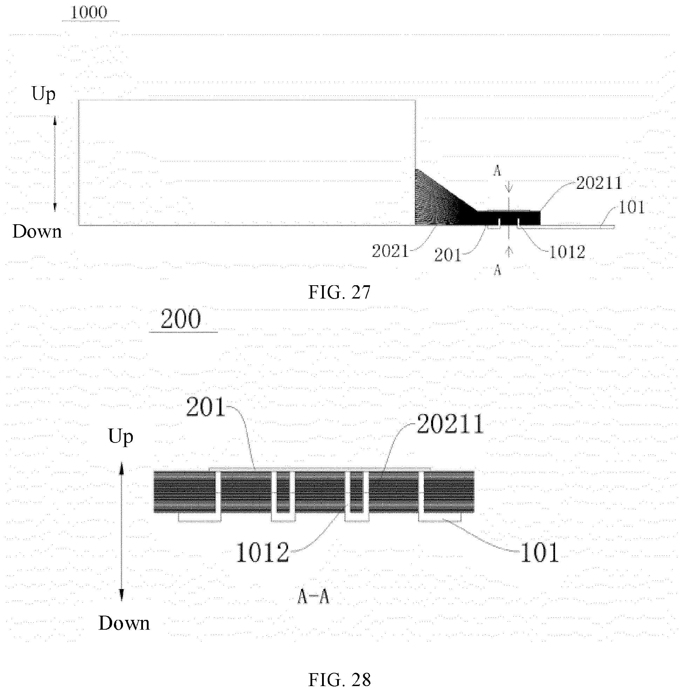

As shown in FIG. 1 to FIG. 31, a current collector assembly 200 according to one embodiment of the present disclosure includes a plurality of layers of tabs 20211, a protection plate 201, a connection plate 101, and at least one protrusion 1012.

In a further embodiment, the current collector assembly 200 includes the plurality of layers of tabs 20211, the protection plate 201, the connection plate 101, and the at least one protrusion 1012. The plurality of layers of tabs 20211 are stacked in a thickness direction of each of the tabs 20211. The protection plate 201 is arranged at a side of plurality of layers of tabs 20211 in the thickness direction of each of the tabs. The connection plate 101 is arranged at another side of the plurality of layers of tabs 20211 in the thickness direction of each of the tabs. Each of the at least one protrusion 1012 has an end connected to the connection plate 101. Each of the at least one protrusion 1012 penetrates the plurality of layers of tabs 20211, and is electrically connected to the plurality of layers of tabs 20211. Each of the at least one protrusion 1012 has another end located inside of an outer side surface of the protection plate 201.

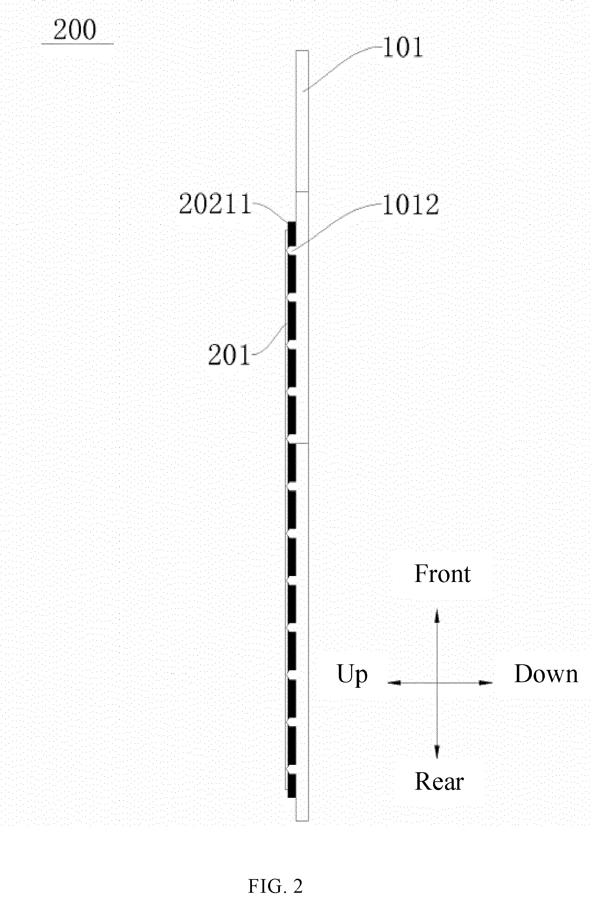

That is, in the thickness direction of tab 20211 (e.g., an up-down direction as shown in FIG. 2), the plurality of layers of tabs 20211 are stacked together. The protection plate 201 is arranged at a side of the plurality of layers of tabs 20211(e.g., an upper side of the plurality of layers of tabs 20211 shown in FIG. 2). The connection plate 101 is arranged at another side of the plurality of layers of tabs 20211 (e.g. a lower side of the plurality of layers of tabs 20211 shown in FIG. 2). The connection plate 101 is connected to the end of each of the at least one protrusion 1012 (e.g., a lower end of each of the at least one protrusion 1012 shown in FIG. 2). Each of the at least one protrusion 1012 pierces the plurality of layers of tabs 20211, and is electrically connected to the plurality of layers of tabs 20211. The other end of each of the at least one protrusion 1012 (e.g., an upper end of each of the at least one protrusion 1012 shown in FIG. 2) is located in a surface of the protection plate 201 facing towards the connection plate 101. Therefore, the at least one protrusion 1012 can be prevented from being damaged, thereby prolonging a service life of the plurality of layers of tabs 20211.

Referring to FIG. 2, the plurality of layers of tabs 20211 are stacked in the up-down direction. The protection plate 201 is located at the upper side of the plurality of layers of tabs 20211. The connection plate 101 is located at the lower side of the plurality of layers of tabs 20211. The connection plate 101 is connected to the lower end of each of the at least one protrusion 1012. The upper end of the each of the at least one protrusion 1012 pierces the plurality of layers of tabs 20211. The at least one protrusion 1012 and the tabs 20211 are electrically connected to each other, and the upper end of each of the at least one protrusion 1012 is located in a lower surface of the protection plate 201. It is understood that the at least one protrusion 1012 is covered by protection plate 201.

With the current collector assembly 200 according to the embodiments of the present disclosure, by arranging the protection plate 201 covering the at least one protrusion 1012, a top of each of the at least one protrusion 1012 is prevented from extending beyond the protection plate 201, thereby avoiding the at least one protrusion 1012 from being damaged, which can prolong a service life of the current collector assembly 200 and enhance connection strength between the tabs 20211 and the at least one protrusion 1012. Thus, the connection is stable. Further, a possibility that tabs 20211 and the at least one protrusion 1012 are separated from each other during transportation or using process is reduced, and reliability of battery cell 1000 is ensured. In addition, a failure rate is reduced, and use safety of the battery pack can be ensured, which can avoid occurrence of accidents.

In some embodiments of the present disclosure, the other end of each of the at least one protrusion 1012 is connected to the protection plate 201. Referring to FIG. 2, the upper end of each of the at least one protrusion 1012 is connected to the protection plate 201. The at least one protrusion 1012 and the protection plate 201 may be connected to each other through welding, bonding, snapping, plugging, or the like.

Further, the other end of each of the at least one protrusion 1012 is fixed to an inner surface of the protection plate 201. Referring to FIG. 2, the upper end of each of the at least one protrusion 1012 is fixed to a lower surface of the protection plate 201. In this way, the connection strength between the tabs 20211 and the at least one protrusion 1012 is further enhanced, and the tabs 20211 and the at least one protrusion 1012 are prevented from being separated from each other. As a result, the current collector assembly 200 has a more stable structure. Thus, a production yield of the current collector assembly 200 is ensured, and a yield of the battery cell 1000 is improved. Therefore, the danger of the battery pack is reduced to realize a safe use.

In some embodiments of the present disclosure, the at least one protrusion 1012 is arranged at the connection plate 101, and is connected to the protection plate 201 by penetrating the plurality of layers of tabs 20211. The at least one protrusion 1012 and the connection plate 101 may be integrally formed. In this way, the number of parts of the current collector assembly 200 can be reduced, thereby enhancing overall connection strength of the current collector assembly 200 and improving a connection stability between the at least one protrusion 1012 and the tabs 20211. Therefore, a defective product rate of the current collector assembly 200 can be reduced, thereby prolonging the service life of the current collector assembly 200.

In other embodiments of the present disclosure, the connection plate 101 and the at least one protrusion 1012 are provided separately. The at least one protrusion 1012 is connected to the connection plate 101 through welding, bonding, plugging or snapping. In this way, the connection plate 1011 and the at least one protrusion 1012 are two separated components, which reduces production difficulty of the current collector assembly 200 and production cost of the current collector assembly 200. Therefore, a fault tolerance rate during the welding of the at least one protrusion 1012 and the tabs 20211 can be improved.

In some embodiments, the plurality of protrusions 1012 are connected to the connection plate 1011 through the welding. In this way, a connection can be carried out simply. Moreover, the at least one protrusion 1012 is firmly connected to the connection plate 1011, and thus is not easily damaged.

In a further embodiment, the plurality of protrusions 1012 may be connected to the connection plate 1011 through electromagnetic pulse welding. In an exemplary example, the plurality of protrusions 1012 may also be connected to the connection plate 1011 through friction welding. In another exemplary example, the plurality of protrusions 1012 may also be connected to the connection plate 1011 through ultrasonic welding.

In other embodiments of the present disclosure, the at least one protrusion 1012 is arranged at the protection plate 201, and is connected to the protection plate 101 by penetrating the plurality of layers of tabs 20211. The at least one protrusion 1012 and the protection plate 101 may be integrally formed. As a result, the number of parts of the current collector assembly 200 can be reduced, thereby improving overall connection strength of the current collector assembly 200. Thus, a connection stability between the at least one protrusion 1012 and the tabs 20211 can be improved, reducing a defective product rate of the current collector assembly 200. Therefore, the service life of the current collector assembly 200 can be prolonged.

In other embodiments of the present disclosure, the protection plate 101 and the at least one protrusion 1012 are provided separately. The at least one protrusion 1012 is connected to the protection plate 101 through welding, bonding, plugging or snapping. In this way, the protection plate 101 and the at least one protrusion 1012 are two separated components, which reduces production difficulty of the current collector assembly 200 and production cost of the current collector assembly 200. Therefore, the fault tolerance rate during the welding of the at least one protrusion 1012 and the tabs 20211 can be improved.

In some embodiments, the at least one protrusion 1012 is connected to the protection plate 101 by welding. In this way, the connection can be carried out simply. Moreover, the at least one protrusion 1012 is firmly connected to the protection plate 1011, and thus is not easily damaged.

In a further embodiment, the plurality of protrusions 1012 may be connected to the protection plate 1011 through electromagnetic pulse welding. In an exemplary example, the plurality of protrusions 1012 may also be connected to the protection plate 1011 through friction welding. In another exemplary example, the plurality of protrusions 1012 may also be connected to the protection plate 1011 through ultrasonic welding.

In some embodiments, each of the at least one protrusion 1012 has a height ranging from 0.1 mm to 3 mm in the thickness direction of each of the tabs 20211. That is, each of the at least one protrusion 1012 protrudes from the connection plate 101 by a height ranging from 0.1 mm to 3 mm, thereby avoiding a material waste while ensuring connection strength between the tabs 20211 and the connection plate 101. Further, an overall structure of the battery cell 1000 is convenient to be assembled into the battery pack, saving a mounting space to realize a compact structure. Therefore, a volume of the battery pack can be reduced, and transportation costs can be lowered.

For example, a height of each of the at least one protrusion 1012 may be 0.1 mm, 0.15 mm, 0.2 mm, 0.4 mm, 0.55 mm, 0.6 mm, 0.85 mm, 1.0 mm, 1.1 mm, 1.2 mm, 1.35 mm, 1.4 mm, 1.5 mm, 1.6 mm, 1.7 mm, 1.8 mm, 2.0 mm, 2.2 mm, 2.45 mm, 2.6 mm, 2.7 mm, 2.8 mm, 2.9 mm, 3.0 mm, or the like.

In some embodiments of the present disclosure, each of the at least one protrusion 1012 has a weight ranging from 0.1 mm to 3 mm. Therefore, a material waste is avoided, and the connection stability between tabs 20211 and connection plate 101 can be ensured. For example, the weight of each of the at least one protrusion 1012 may be 0.1 mm, 0.15 mm, 0.2 mm, 0.3 mm, 0.4 mm, 0.55 mm, 0.6 mm, 0.85 mm, 1.0 mm, 1.1 mm, 1.2 mm, 1.35 mm, 1.4 mm, 1.5 mm, 1.6 mm, 1.7 mm, 1.8 mm, 1.9 mm, 2.0 mm, 2.1 mm, 2.2 mm, 2.3 mm, 2.45 mm, 2.6 mm, 2.7 mm, 2.8 mm, 2.9 mm, 2.9 mm, 3.0 mm, or the like.

In some embodiments of the present disclosure, the at least one protrusion 1012 includes a plurality of protrusions 1012 arranged in a matrix pattern. Such an arrangement of the plurality of protrusions 1012 in the matrix pattern can enhance the connection strength between the tabs 20211 and the plurality of protrusions 1012, thereby preventing the tabs 20211 and the plurality of protrusions 1012 from being separated from each other during transportation or use. In addition, the yield of the battery cell 1000 can be increased, and thus contact areas between the plurality of protrusions 1012 and each layer of tabs 20211 can be increased. As a result, an overcurrent area can be increased, and thus uniform heat dissipation can be realized. The battery pack is difficult to malfunction, which reduces a risk factor of users and improves user experience.

In some embodiments of the present disclosure, each of the at least one protrusion 1012 extends on a surface of connection plate 101 along a straight and/or curved line. That is, each of the at least one protrusion 1012 may extend on the surface of the connection plate 1011 along the straight line, or each of the at least one protrusion 1012 may also extend on the surface of the connection plate 1011 along the curved line, or each of the at least one protrusion 1012 may also extend on the surface of the connection plate 1011 along the straight line and then along the curved line, or extend on the surface of the connection plate 1011 along the curved line and then along the straight line. Therefore, welding requirements of different composite current collectors 202 are met, and the connection strength between the tabs 20211 and the connection plate 101 is enhanced. Moreover, an applicable range of the connection plate 101 is expanded, and the production cost of the connection plate 101 is reduced.

In some embodiments, the plurality of protrusions 1012 are connected to the plurality of layers of tabs 20211 through the ultrasonic welding.

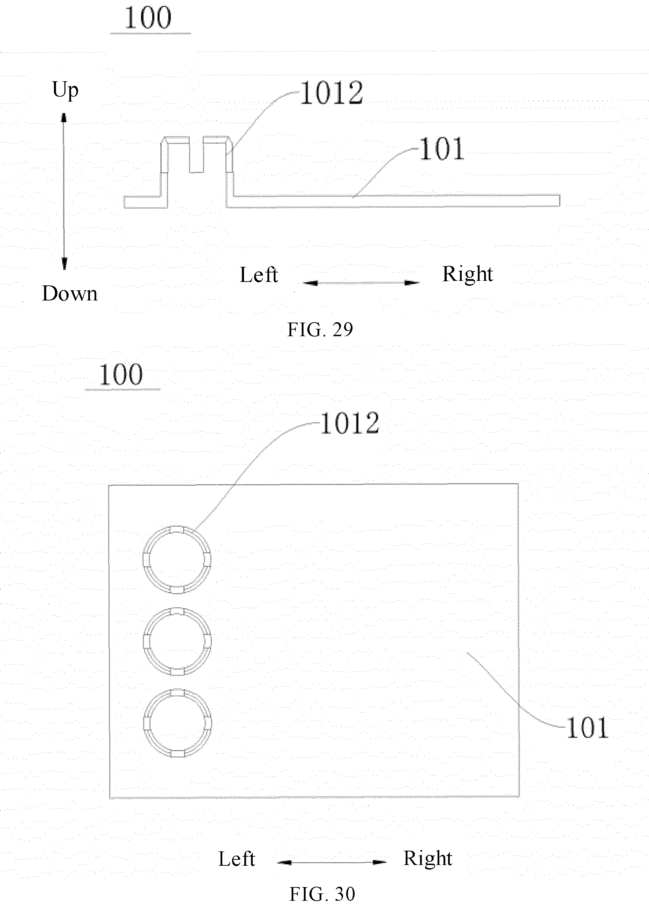

Referring to FIG. 29, each of the at least one protrusion 1012 extends on an upper surface of the connection plate 1011 along the curved line, and has an annular shape. Each of the at least one protrusion 1012 has four recesses formed at an upper part of each of the at least one protrusion 1012. The four recesses are evenly arranged at intervals at the upper part of each of the at least one protrusion 1012 and recessed downwards from an upper end face of each of the at least one protrusion 1012 vertically. In this way, the contact area between the at least one protrusion 1012 and each layer of tabs 20211 is increased. Therefore, the overcurrent area is increased. Thus, the connection strength can be enhanced.

In some embodiments of the present disclosure, the plurality of protrusions 1012 are arranged more densely in an ultrasonic vibration direction than in other directions. That is, the plurality of protrusions 1012 protrude away from the connection plate 101. A density at which the plurality of protrusions 1012 are arranged in the ultrasonic vibration direction is maximum. The plurality of protrusions 1012 are arranged less densely in directions other than the ultrasonic vibration direction than in the ultrasonic vibration direction.

When using the ultrasonic welding, high-frequency vibration of tens of thousands of times per second may be generated when an ultrasonic wave acts on a contact surface of an object to be welded. Since the plurality of protrusions 1012 are densely arranged in the ultrasonic vibration direction, the plurality of protrusions 1012 can easily pierce the plurality of layers of tabs 20211, and the welding energy can thus easily pass through the connection plate 101 and the tabs 20211. In this way, the difficulty of welding the tabs 20211 and the connection plate 101 is reduced.

Further, the plurality of protrusions 1012 are arranged in an array on the surface of the connection plate 101. The plurality of protrusions 1012 are arranged in the ultrasonic vibration direction at a maximum density. It should be noted here that when the arrangement density of the plurality of protrusions 1012 in the ultrasonic vibration direction is enough greater, each of the plurality of protrusions 1012 has an elongated shape extending in the ultrasonic vibration direction.

In some embodiments of the present disclosure, a spacing between two adjacent protrusions 1012 in the ultrasonic vibration direction is L1, and a spacing between two adjacent protrusions 1012 in a direction perpendicular to the ultrasonic vibration direction is L2, where L1 and L2 satisfy 0.5mm≤L1≤10mm, 0.5mm≤L2≤10mm, and L1≤L2. That is, the spacing between the two adjacent protrusions 1012 in the ultrasonic vibration direction is less than or equal to the spacing between the two adjacent protrusions 1012 in the direction perpendicular to the ultrasonic vibration direction. That is, the arrangement density of the plurality of protrusions 1012 in the direction perpendicular to the ultrasonic vibration direction is less than that in the ultrasonic vibration direction. In this way, the welding speed is further improved. Therefore, the production efficiency is improved with lowered production cost. In addition, an arrangement pattern of the protrusions 1012 is optimized. Therefore, an unstable welding point between the tabs 20211 and the connection plate 101 is avoided, thereby improving product quality.

For example, the spacing L1 between two adjacent protrusions 1012 in the ultrasonic vibration direction may be 0.5 mm, 0.7 mm, 0.9 mm, 1 mm, 1.5 mm, 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, 8.5 mm, 9 mm, 9.5 mm, 10 mm, etc. The spacing L2 between two adjacent projections 1012 in the direction perpendicular to the ultrasonic vibration direction may be 0.5 mm, 0.7 mm, 0.9 mm, 1 mm, 1.5 mm, 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, 8.5 mm, 9 mm, 9.5 mm, 10 mm, etc.

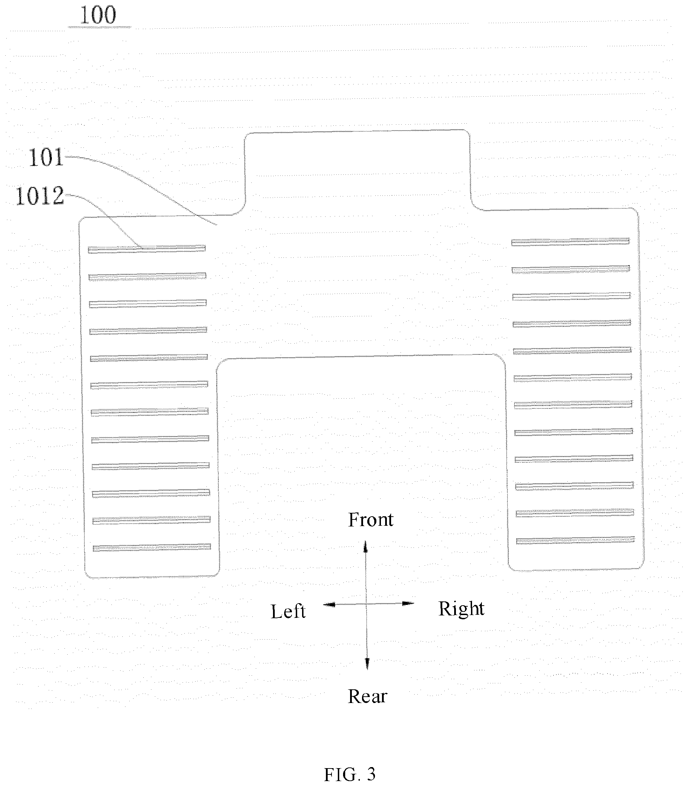

In an embodiment of the present disclosure, the plurality of protrusions 1012 extend on a surface of the connection plate 1011 in the ultrasonic vibration direction, and are arranged at intervals in the direction perpendicular to the ultrasonic vibration direction. Referring to FIG. 3, the plurality of protrusions 1012 extend on an upper surface of the connection plate 101 in the ultrasonic vibration direction, and are arranged at intervals in the direction perpendicular to the ultrasonic vibration direction. Each of the plurality of protrusion 1012 has an elongated shape. In this way, the contact areas between the tabs 20211 and the plurality of protrusions 1012 is significantly increased. Therefore, the unstable welding between the tabs 20211 and the connection plate 101 is avoided, which enhances the connection strength between the tabs 20211 and the connection plate 101.

In some embodiments of the present disclosure, in the direction perpendicular to the ultrasonic vibration direction, the spacing L2 between two adjacent protrusions 1012 is not less than a width d of each of the plurality of protrusions 1012. That is, in the direction perpendicular to the ultrasonic vibration direction, the spacing L2 between two adjacent protrusions 1012 is greater than or equal to the width d of each of the plurality of protrusion 1012. L2 may be greater than d, or may also be equal to d. In this way, a placement direction of the connection plate 101 during the welding can be clearly distinguished. By setting a direction in which the spacing between two adjacent protrusions 1012 is wider towards the direction perpendicular to the ultrasonic vibration direction, the production efficiency can be improved, and the plurality of protrusions 1012 can be firmly welded to the tabs 20211.

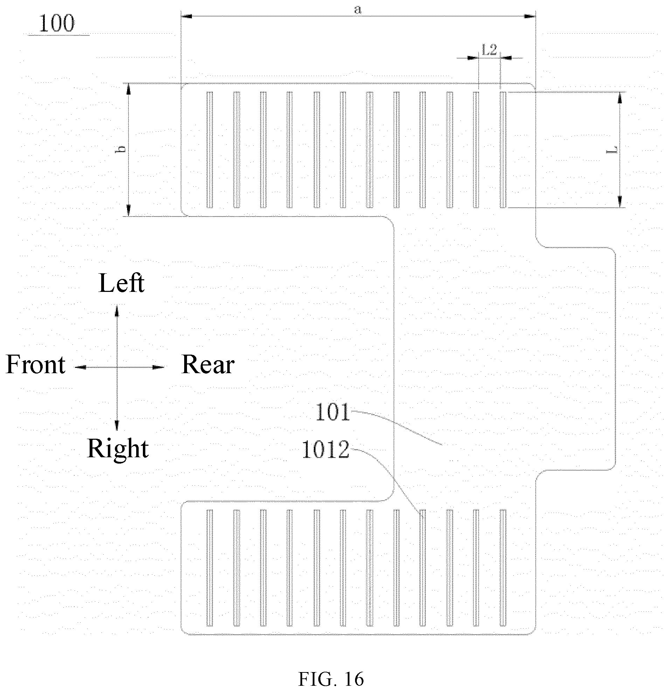

In some embodiments of the present disclosure, a length of each of the plurality of protrusions 1012 in the ultrasonic vibration direction is L, and a width of each of the plurality of protrusions 1012 in the direction perpendicular to the ultrasonic vibration direction is d, where L and d satisfy L*2+d*2≥X, where X represents a width of each of the tabs 20211. It can be understood that a perimeter of each of the plurality of protrusions 1012 should not be less than the width of each of the tabs 20211. It should be noted here that the width X of each of the tabs 20211 is a length of a side of each of the tabs 20211 perpendicular to the ultrasonic vibration direction. Referring to FIG. 16, a length of each of the tabs 20211 in the left-right direction is the width of each of the tabs 20211.

In some embodiments of the present disclosure, the connection plate 101 and the protrusions 1012 are made of a same material. Due to different materials, conductors may vary in parameters such as a temperature resistance and a resistance, which may result in a significant safety risk. However, by using the same material, the reliability of the battery cell 1000 can be ensured, thereby reducing a failure rate. In addition, use safety of the battery pack can be ensured, thereby avoiding an accident.

In some embodiments, the connection plate 101 is made of a T2 pure copper or a copper alloy, or the like.

In other embodiments, a conductive connection assembly 100 includes a connection plate 101 and at least one protrusion 1012. The connection plate 101 is configured to connect a plurality of layers of tabs 20211 of a current collector 202 through ultrasonic welding. The connection plate 101 includes the connection plate 101 and the at least one protrusion 1012 arranged at the connection plate 101. Each of the at least one protrusion 1012 protrudes from a side surface of the connection plate 101 in the thickness direction of the connection plate 101. The conductive connection assembly 100 includes a plurality of protrusions 1012. The plurality of protrusions 1012 are configured to penetrate the plurality of layers of tabs 20211.

In some embodiments, each of the tabs 20211 includes a support insulation layer 202113, and a first conductive layer 202111 and a second conductive layer 202112 that cover two side surfaces of the support insulation layer 202113 in a thickness direction of the support insulation layer. Referring to FIG. 31, the support insulation layer 202113 is located between the first conductive layer 202111 and the second conductive layer 202112. The first conductive layer 202111 and the second conductive layer 202112 cover an upper surface and a lower surface of the support insulation layer 202113.

In some embodiments, the support insulation layer 202113 is a composite polymer insulation layer.

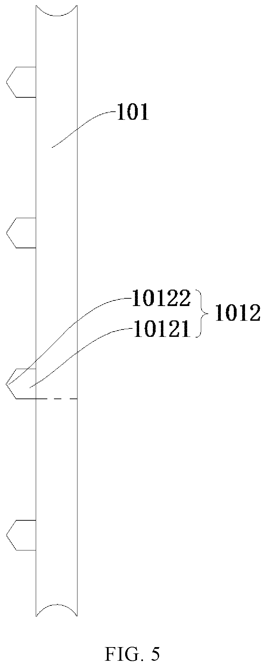

In some other embodiments, with reference to FIG. 5, each of the at least one protrusion 1012 includes two parts including a connection segment 10121 and a piercing segment 10122. A lower part of each of the at least one protrusion is the connection segment 10121, and an upper part of each of the at least one protrusion 1012 is the piercing segment 10122. The connection segment 10121 is connected to the connection plate 101. The piercing segment 10122 is connected to an upper end of the connection segment 10121.

In some embodiments, the piercing segment 10122 of each of the at least one protrusion 1012 is configured to pierce the plurality of layers of tabs 20211, and the connection segment 10121 of each of the at least one protrusion 1012 is configured to connect the plurality of layers of tabs 20211. In this way, the welding energy can easily pass through the connection plate 101 and the tabs 20211. Therefore, the difficulty of welding the tabs 20211 and the connection plate 101 is reduced. Thus, the manufacturing time is reduced. Moreover, the connection strength between the tabs 20211 and the connection plate 101 is enhanced. Therefore, the connection is stable, and thus the connection strength is enhanced while ensuring the piercing effect of the at least one protrusion 1012.

A current collector assembly 200 according to an exemplary embodiment of the present disclosure will be described below with reference to FIG. 1 to FIG. 31.

Referring to FIG. 16, each of the at least one protrusion 1012 has an elongated shape. The current collector assembly 200 includes a plurality of layers of tabs 20211, a protection plate 201, a connection plate 101, and a plurality of protrusions 1012. Each of the plurality of protrusions protrudes upwards from an upper surface of the connection plate 101. Each of the plurality of protrusions 1012 extends on the upper surface of the connection plate 101 in an ultrasonic vibration direction. The thickness of the connection plate 101 is 0.8 mm, and the length L of each of the plurality of protrusions 1012 is 13 mm. The width d of each of the plurality of protrusions 1012 is 0.6 mm, and the height of each of the plurality of protrusions 1012 is 0.6 mm. The spacing L2 between two adjacent protrusions 1012 is 2.4 mm. Each of the plurality of protrusions 1012 extends on the upper surface of the connection plate 101 along the straight line. The connection plate 101 and the plurality of protrusions 1012 are integrally formed. Each of the tabs 20211 has three layers including a first conductive layer 202111, a second conductive layer 202112, and a support insulation layer 202113 from top to bottom. The protection plate 201 is arranged above the plurality of layers of tabs 20211, and the upper end of each of the at least one protrusion 1012 is connected to the protection plate 201.

A current collector assembly 200 according to one embodiment of the present disclosure will be described below with reference to FIG. 1 to FIG. 31.

As shown in FIG. 1 to FIG. 31, a current collector assembly 200 according to one embodiment of the present disclosure includes a current collector 202 and a conductive connection assembly 100.

In some embodiments, the current collector assembly 200 includes a current collector 202 and a conductive connection assembly 100. The current collector 202 includes a plurality of layers of tabs 20211 stacked in a thickness direction of each of the tabs 20211. The conductive connection assembly 100 includes a protection plate 201 and a connection plate 101. The protection plate 201 is arranged at a side of the plurality of layers of tabs 20211 in the thickness direction. The connection plate 101 is arranged at another side of the plurality of layers of tabs 20211 in the thickness direction. The connection plate 101 and/or the protection plate 201 are provided with at least one protrusion 1012. Each of the at least one protrusion 1012 is configured to pierce the plurality of layers of tabs 20211 through high frequency vibration, and be electrically connected to the plurality of layers of tabs 20111. The high frequency vibration has a frequency ranging from 15 KHz to 40 KHz. In one embodiment, the at least one protrusion 1012 is arranged at the connection plate 101. In one embodiment, the protection plate 201 is provided with the at least one protrusion 1012. In one embodiment, each of the connection plate 101 and the protection plate 201 is provided with the at least one protrusion 1012.

That is, the plurality of layers of tabs 20211 are stacked in the thickness direction of each of the tabs 20211. The protection plate 201 is arranged at the side of the plurality of layers of tabs 20211 in the thickness direction. The connection plate 101 is provided at the other side of the plurality of layers of tabs 20211 in the thickness direction. Each of the at least one protrusion 1012 has an end connected to the connection plate 101. Each of the at least one protrusion 1012 penetrates the plurality of layers of tabs 20211, and is electrically connected to the plurality of layers of tabs 20211. Each of the at least one protrusion 1012 has another end located inside of the outer side surface of the protection plate 201. The at least one protrusion 1012 may be formed at the connection plate 101, and may also be formed at the protection plate 201. The at least one protrusion 1012 is configured to pierce the plurality of layers of tabs 20211 through high frequency vibration in the vibration frequency ranging from 15 KHz to 40 KHz.

For example, the vibration frequency of the high frequency vibration may be 15 KHz, 20 KHz, 25 KHz, 30 KHz, 35 KHz, 40 KHz, etc.

In the current collector assembly 200 of the embodiments of the present disclosure, the at least one protrusion 1012 can pierce the plurality of layers of tabs 20211 through the high frequency vibration. The high frequency vibration acts on a contact surface of an object to be welded. Surfaces of the two objects rub against each other to generate heat, and thus a fusion between molecular layers is formed, which further increases a welding speed between the at least one protrusion 1012 and the plurality of layers of tabs 20211 and ensures a stable connection between the tabs 20211 and the connection plate 101. Therefore, the service life of the current collector assembly 200 can be prolonged

In some embodiments of the present disclosure, when the high frequency vibration has an amplitude ranging from 5 µm to 100 µm, the welding effect and the welding speed can be further improved, and the welding difficulty can be further reduced. For example, the amplitude of the high frequency vibration may be 5 µm, 10 µm, 15 µm, 20 µm, 25 µm, 30 µm, 35 µm, 40 µm, 45 µm, 50 µm, 55 µm, 60 µm, 65 µm, 70 µm, 75 µm, 80 µm, 85 µm, 90 µm, 95 µm, 100 µm, etc.

In some embodiments of the present disclosure, each of the at least one protrusion 1012 extends on a surface of the connection plate 101 or a surface of the protection plate 201. A high frequency vibration direction is parallel to an extending direction of each of the at least one protrusion 1012. That is, the at least one protrusion 1012 may extend on the surface of the connection plate 101, and the at least one protrusion 1012 may also extend on the surface of the protection plate 201. The extending direction of each of the at least one protrusion 1012 is parallel to the high frequency vibration direction. Further, the extending direction of each of the at least one protrusion 1012 is consistent with the high frequency vibration direction, which contributes to increasing the welding speed of the at least one protrusion 1012 and the tabs 20211. Therefore, the production duration can be reduced, and the production efficiency can be improved.

Referring to FIG. 29, each of the at least one protrusion 1012 extends on the upper surface of the connection plate 1011 along a curved line, and has an annular shape. Each of the at least one protrusion 1012 has four recesses formed at an upper part of each of the at least one protrusion 1012. The four recesses are evenly arranged at intervals at the upper part of each of the at least one protrusion 1012 and recessed downwards from an upper end face of each of the at least one protrusion 1012 vertically. In this way, the contact area between the at least one protrusion 1012 and each layer of the tabs 20211 is increased. Therefore, the overcurrent area is increased, thereby enhancing the connection strength.

In some embodiments of the present disclosure, the high frequency vibration is generated through ultrasonic welding. As the ultrasonic welding has a fast welding speed, high welding strength, a good sealing, a traditional welding/bonding process is replaced. The ultrasonic welding has low costs, a pollution-free cleaning without damaging a soft connecting piece and the tabs 20211, a stable welding process, and a good conductivity after welding in which a resistivity is extremely low or nearly zero. In addition, a welding duration is short without flux, gas or solder. No spark is generated in the welding process, and the welding process is environmental friendly and safe.

In some embodiments, an ultrasonic welding pressure is greater than or equal to 20 N, and the welding duration is greater than or equal to 30 ms.

In some embodiments, the connection plate 101 is provided with the at least one protrusion 1012. Each of the at least one protrusion 1012 has an end connected to the connection plate 101. The at least one protrusion 1012 arranged at the connection plate 101 is configured to pierce the plurality of layers of tabs 20211 through the high frequency vibration, and be electrically connected to the plurality of layers of tabs 20211. Each of the at least one protrusion 1012 has another end connected to the protection plate 201. Referring to FIG. 2, the lower end of each of the at least one protrusion 1012 is connected to the connection plate 101. The at least one protrusion 1012 can pierce the plurality of layers of tabs 20211 through the high frequency vibration of the ultrasonic welding. The at least one protrusion 1012 and the plurality of layers of tabs 20211 are electrically connected to each other. In this way, under an action of own gravity of the tabs 20211 during the welding, the at least one protrusion 1012 can easily pierce the plurality of layers of tabs 20211, further increasing the welding speed.

Further, the other end of each of the at least one protrusion 1012 is fixed to an inner side surface of the protection plate 201 or arranged in the protection plate 201 through the ultrasonic welding. For example, as shown in FIG. 2, the upper end of each of the at least one protrusion 1012 is fixedly connected to the protection plate 201 through the ultrasonic welding and is connected to the lower side surface of the protection plate 201. In this way, the connection strength between the tabs 20211 and the at least one protrusion 1012 is further enhanced, and separation between the tabs 20211 and the at least one protrusion 1012 is avoided, which allows for a more stable structure of the current collector assembly 200. As a result, the production yield of the current collector assembly 200 is ensured. In addition, the yield of the battery cell 1000 is improved, and a risk of the battery pack is reduced.

In some embodiments, the upper end of each of the at least one protrusion 1012 may also be arranged in the protection plate 201 to be connected to the protection plate 201.

In another embodiment of the present disclosure, the protection plate 201 is provided with the at least one protrusion 1012. Each of the at least one protrusion 1012 arranged at the protection plate 201 is connected to the connection plate 101 by piercing the plurality of layers of tabs 20211 through the high frequency vibration. Referring to FIG. 2, the upper end of each of the at least one protrusion 1012 is connected to the protection plate 201, and the at least one protrusion 1012 is configured to pierce the plurality of layers of tabs 20211 through the high frequency vibration of the ultrasonic welding. The lower end of each of the at least one protrusion 1012 is connected to the connection plate 101, and the at least one protrusion 1012 and the plurality of layers of tabs 20211 are electrically connected to each other. Therefore, under an action of its own gravity of the protection plate 201 during the welding, the at least one protrusion 1012 can easily pierce the plurality of layers of tabs 20211, further increasing the welding speed.

In some embodiments of the disclosure, the current collector assembly 200 includes a plurality of protrusions 1012 arranged in a matrix pattern. In an exemplary example, the plurality of protrusions 1012 are arranged at a side of the connection plate 101 in the matrix pattern. Such an arrangement of the plurality of protrusions 1012 in the matrix pattern can enhance the connection strength between the tabs 20211 and the connection plate 101, thereby preventing the tabs 20211 and the connection plate 101 from being separated from each other during transportation or use. As a result, the yield of the battery cell 1000 is improved. The contact area between the at least one protrusion 1012 and each layer of tabs 20211 is improved, which increases the overcurrent area and allows for uniform heat dissipation. The battery pack is difficult to malfunction, which reduces the risk factor of users and improves the user experience.

In some embodiments of the disclosure, the plurality of protrusions 1012 are arranged more densely in the high frequency vibration direction than in directions other than the high frequency vibration direction. That is, the plurality of protrusions 1012 are arranged more densely in the ultrasonic vibration direction than in other directions. The plurality of protrusions 1012 protrude away from the connection plate 101. The plurality of protrusions 1012 are arranged in the ultrasonic vibration direction at maximum density. The plurality of protrusions 1012 are arranged in the directions other than the ultrasonic vibration direction at a less density than that in the ultrasonic vibration direction.

In some embodiments of the disclosure, the plurality of protrusions 1012 extend in the high frequency vibration direction and are arranged at intervals in the direction perpendicular to the high frequency vibration direction. Referring to FIG. 3, the plurality of protrusions 1012 extend on the upper surface of the connection plate 101 in the ultrasonic vibration direction, and are arranged at intervals in the direction perpendicular to the ultrasonic vibration direction. Each of the plurality of protrusions 1012 has the elongated shape, which can greatly increase the contact areas between the tabs 20211 and the plurality of protrusions 1012. As a result, weak welding between the tabs 20211 and the plurality of protrusions 1012 is avoided. In addition, the connection strength between tabs 20211 and connection plate 101 is enhanced.

In some embodiments, the current collector assembly 200 includes an electrode plate 2021. The electrode plate 2021 includes a plurality of tabs 20211. The plurality of tabs 20211 are stacked together. Each of the tabs 20211 includes a support insulation layer 202113, and a first conductive layer 202111 and a second conductive layer 202112 that cover two side surfaces of the support insulation layer 202113 in the thickness direction of the support insulation layer 202113. Referring to FIG. 31, the support insulation layer 202113 is located between the first conductive layer 202111 and the second conductive layer 202112. The first conductive layer 202111 and the second conductive layer 202112 cover the upper surface and the lower surface of the support insulation layer 202113. In a further embodiment, the support insulation layer 202113 may be a polymer layer. Since the polymer layer has low compressive strength, ultrasonic waves cannot be transmitted to the plurality of layers of tabs 20211 at a bottom when using the ultrasonic welding. A friction force is insufficient when welding is performed without the protrusions, resulting in unreliable welding due to the weak welding. In the embodiments of the present disclosure, since the plurality of protrusions 1012 are additionally provided, the friction force during the welding can be increased, and unreliable welding due to the weak welding can be improved.

The battery cell 1000 may include at least two electrode plates 2021 including a positive electrode plate and a negative electrode plate. The plurality of tabs 20211 stacked together may be formed by winding one electrode plate sheet material and stacking the plurality of tabs 20211 at the electrode plate sheet material. In another embodiment, the plurality of tabs 20211 stacked together may be formed by stacking a plurality of electrode plate sheet materials and aligning the tabs 20211 on each of the plurality of electrode plate sheet materials and then finally forming the plurality of tabs stacked together. The plurality of tabs 20211 may be two or more tabs 20211.

A current collector assembly 200 according to an exemplary embodiment of the present disclosure will be described below with reference to FIG. 1 to FIG. 31.

Referring to FIG. 16, the at least one protrusion 1012 has an elongated shape. The current collector assembly 200 includes a current collector 202 and a conductive connection assembly 100. The at least one protrusion 1012 includes a plurality of protrusions 1012. The connection plate 101 is provided with the plurality of protrusions 1012 at an upper surface of connection plate 101. Each of the plurality of protrusions 1012 extends on the upper surface of the connection plate 101 in the ultrasonic vibration direction. The thickness of the connection plate 101 is 0.8 mm, and the height of each of the plurality of protrusions 1012 is 0.6 mm. The length L of each of the plurality of protrusions 1012 is 13 mm, and the width d of each of the plurality of protrusions 1012 is 0.6 mm. The spacing L2 between two adjacent protrusions 1012 is 2.4 mm. Each of the plurality of protrusions 1012 extends on the upper surface of the connection plate 101 along the straight line. The connection plate 101 and the plurality of protrusions 1012 are integrally formed. The tabs 20211 has three layers including a first conductive layer 202111, a second conductive layer 202112, and a support insulation layer 202113 from top to bottom. The protection plate 201 is arranged above the plurality of layers of tabs 20211. The upper end of each of the plurality of protrusions 1012 is connected to the protection plate 201. The ultrasonic vibration has a vibration frequency ranging from 15 KHz to 40 KHz, and the amplitude ranging from 5 µm to 100 µm. The welding pressure of the ultrasonic vibration is greater than or equal to 20 N, and the welding duration is greater than or equal to 30 ms.

A current collector assembly 200 according to one embodiment of the present disclosure will be described below with reference to FIG. 1 to FIG. 31.

As shown in FIG. 1 to FIG. 31, the current collector assembly 200 according to one embodiment of the present disclosure includes a current collector 202 and a conductive connection assembly 100.

In some embodiments, the current collector assembly 200 includes a current collector 202 and a conductive connection assembly 100. The current collector 202 includes a plurality of layers of tabs 20211 stacked in the thickness direction of tabs 20211. The conductive connection assembly 100 includes a protection plate 201 and a connection plate 101. The protection plate 201 is arranged at a side of the plurality of layers of tabs 20211 in the thickness direction. The connection plate 101 is arranged at the other side of the plurality of layers of tabs 20211 in the thickness direction. The connection plate 101 and/or the protection plate 201 are provided with the at least one protrusion 1012. Each of the at least one protrusion 1012 includes a connection segment 10121 and a piercing segment 10122 connected to each other in a height direction. The connection segment 10121 has an end connected to the connection plate 101 or the protection plate 201. The piercing segment 10122 is connected to another other end of connection segment 10121. The piercing segment 10122 is configured to pierce the plurality of layers of tabs 20211, and be electrically connected to the plurality of layers of tabs 20211. In one embodiment, the connection plate 101 is provided with the at least one protrusion 1012. In one embodiment, the protection plate 201 is provided with the at least one protrusion 1012. In one embodiment, each of the connection plate 101 and the protection plate 201 is provided with the protrusions 1012.

That is, the plurality of layers of tabs 20211 are stacked in the thickness direction of each of the tabs 20211. The protection plate 201 is arranged at the side of the plurality of layers of tabs 20211 in the thickness direction. The connection plate 101 is arranged at the other side of the plurality of layers of tabs 20211 in the thickness direction. One end of each of the at least one protrusion 1012 is connected to the connection plate 101. Each of the at least one protrusion 1012 penetrates the plurality of layers of tabs 20211, and is electrically connected to the plurality of layers of tabs 20211. The other end of each of the at least one protrusion 1012 is located inside the outer surface of the protection plate 201. The at least one protrusion 1012 may be formed at the connection plate 101, and the at least one protrusion 1012 may also be formed at the protection plate 201. Each of the at least one protrusion 1012 is electrically connected to plurality of layers of tabs 20211.

Each of the at least one protrusion 1012 includes two parts including a connection segment 10121 and a piercing segment 10122. When the at least one protrusion 1012 is formed at the connection plate 101, the end of the connection segment 10121 is connected to the connection plate 101, and the other end is connected to the piercing segment 10122. When the at least one protrusion 1012 is formed at the protection plate 201, the end of the connection segment 10121 is connected to the protection plate 201, and the other other end of the connection segment 10121 is connected to the piercing segment 10122. The piercing segment 10122 has a piercing end for piercing the plurality of layers of tabs 20211.

Referring to FIG. 2, in the up-down direction, the plurality of layers of tabs 20211 are stacked together. The protection plate 201 is located at an upper side of the plurality of layers of tabs 20211, and the connection plate 101 is located at a lower side of the plurality of layers of tabs 20211. Each of the at least one protrusion 1012 is electrically connected to the tabs 20211. When the at least one protrusion 1012 is formed at the connection plate 101, the upper end of the at least one protrusion 1012 is located in the lower surface of the protection plate 201. Each of the at least one protrusion 1012 includes two parts including the connection segment 10121 and the piercing segment 10122. The lower part of each of the at least one protrusion 1012 is the connection segment 10121, and the upper part of each of the at least one protrusion 1012 is the piercing segment 10122. The connection segment 10121 is connected to the connection plate 101, and the piercing segment 10122 is connected to the upper end of the connection segment 10121. When the at least one protrusion 1012 is formed at the protection plate 201, the lower end of each of the at least one protrusion 1012 is located in the upper surface of the connection plate 101. The upper part of each of the at least one protrusion 1012 is the connection segment 10121, and the lower part of each of the at least one protrusion 1012 is the piercing segment 10122. The connection segment 10121 is connected to the protection plate 201, and the piercing segment 10122 is connected to the lower end of the connection segment 10121.

With the current collector assembly 200 of the present disclosure, by arranging the at least one protrusion 1012 each having the piercing segment 10122 at the current collector assembly 200, the piercing end can easily pierce the plurality of layers of tabs 20211, and thus the welding energy can easily pass through the connection plate 101 and the plurality of layers of tabs 20211. In this way, the difficulty of welding tabs is reduced, and the welding process of the workers is simplified. The manufacturing time is reduced with the lowered labor costs. Therefore, the service life of the current collector assembly 200 is prolonged.

In some embodiments of the present disclosure, the connection segment 10121 has constant cross sectional areas. The connection segment 10121 is electrically connected to plurality of layers of tabs 20211. Referring to FIG. 5, in the up-down direction, the connection segment 10121 has the constant cross sectional areas. The piercing segment 10122 of each of the at least one protrusion 1012 is configured to pierce the plurality of layers of tabs 20211. The connection segment 10121 of each of the at least one protrusion 1012 is configured to connect the plurality of layers of tabs 20211. In this way, the welding energy can easily pass through the connection plate 101 and the tabs 20211. The difficulty of welding the tabs 20211 and the connection plate 101 is reduced, and the manufacturing duration is reduced. The connection strength between the tabs 20211 and the connection plate 101 is enhanced, and the connection is stable. The piercing effect of the at least one protrusion 1012 is ensured, and the connection strength is enhanced.

In some embodiments of the present disclosure, the piercing segment 10122 has a shape of a cone or a truncated cone. In other words, the piercing segment 10122 may have a shape of a cone, and the piercing segment 10122 may have a shape of a truncated cone.

When the piercing segment 10122 is formed into a conical protrusion 1012, a cone apex angle is greater than 5° and less than 150°, which is more conducive to balancing the connection strength and the difficulty of welding the at least one protrusion 1012 and the tabs 20211. As a result, the welding difficulty may be avoided from being ignored due to ensuring the connection strength between the at least one protrusion 1012 and the tabs 20211, or the connection strength between the at least one protrusion 1012 and the tabs 20211 may be avoided from being ignored due to reducing the welding difficulty. Therefore, the piercing effect of the at least one protrusion 1012 is ensured, and the connection strength is enhanced.

For example, the cone apex angle may be 5°, 10°, 15°, 20°, 25°, 30°, 35°, 40°, 45°, 50°, 55°, 60°, 65°, 70°, 75°, 80°, 85°, 90°, 95°, 100°, 105°, 110°, 115°, 120°, 125°, 130°, 135°, 140°, 145°, 150°, etc.

When the piercing segment 10122 is formed into a truncated conical protrusion 1012. A ratio of a radius of a top surface to a radius of a bottom surface of the piercing segment 10122 is less than or equal to 0.6. In other words, the top surface of the piercing segment 10122 has a predetermined angle with a peripheral surface of the piercing segment 10122. An area of the top surface of the piercing segment 10122 is less than an area of the bottom surface of the piercing segment 10122. Therefore, the top surface of each of the at least one protrusion 1012 can easily pierce the plurality of layers of tabs 20211, which ensures the piercing effect of the at least one protrusion 1012 and reduces a melting of the at least one protrusion 1012 during the welding. Therefore, reliability of the battery cell 1000 can be improved.

For example, the ratio of the radius of the top surface to the radius of the bottom surface of piercing segment 10122 may be 0.6, 0.55, 0.5, 0.45, 0.4, 0.35, 0.3, 0.25, 0.2, 0.15, 0.1, etc.

In some embodiments, the radius of the top surface of piercing segment 10122 is less than or equal to 1.5 mm, and the radius of the bottom surface of piercing segment 10122 is less than or equal to 2.5 mm.

In some embodiments of the present disclosure, each of the at least one protrusion 1012 extends on a surface of the connection plate 101 or of the protection plate 201 along a straight and/or curved line. A cross section of the piercing segment 10122 perpendicular to an extending direction of the at least one protrusion 1012 has a shape of a triangle or a trapezoid. That is, the at least one protrusion 1012 may extend on the surface of the connection plate 101 along a straight line, and the at least one protrusion 1012 may also extend on the surface of the connection plate 101 along a curved line. Each of the at least one protrusion 1012 may also extend on the surface of the protection plate 201 along a curved line, and each of the at least one protrusion 1012 may also extend on the surface of the protection plate 201 along a straight line. Each of the at least one protrusion 101 may extends on the surface of the connection plate 101 along a straight line and then along a curved line, or extend along a curved line and then extend along a straight line. Each of the at least one protrusion 1012 may extend on the surface of the protection plate 201 along a straight line and then along a curved line, or extend along a curved line and then along a straight line. Thus, different welding requirements of the composite current collector 202 are meet. Moreover, an applicable range of the connection plate 101 is expanded.

Referring to FIG. 29, each of the at least one protrusion 1012 extends on the upper surface of the connection plate 101 along the curved line. Each of the at least one protrusion 1012 has an annular shape. Each of the at least one protrusion 1012 has four recesses formed at an upper part of each of the at least one protrusion 1012. The four recesses are evenly arranged at intervals at the upper part of each of the at least one protrusion 1012 and recessed downwards from an upper end face of each of the at least one protrusion 1012 vertically. In this way, the contact area between the at least one protrusion 1012 and each layer of tabs 20211 is increased. Therefore, the overcurrent area is increased. Thus, the connection strength can be enhanced.

When the cross section of the piercing segment 10122 perpendicular to the extending direction of the at least one protrusion 1012 has the shape of the triangle, an angle of the piercing end in the cross section is less than or equal to 120°. That is, each of the at least one protrusion 1012 may be in a shape of a pyramid prism. The protrusion 1012 with the triangular cross section is easier to pierce the plurality of layers of tabs 20211, which can ensure the piercing effect of the at least one protrusion 1012. In addition, the angle of the piercing end is less than or equal to 120°, and therefore the piercing effect of the at least one protrusion 1012 can be further ensured. Thus, the difficulty of welding the tabs 20211 and the connection plate 101 is further reduced.

For example, in the cross section of the piercing segment 10122 perpendicular to the extending direction, the angle of the piercing end may be 5°, 10°, 15°, 20°, 25°, 30°, 35°, 40°, 45°, 50°, 55°, 60°, 65°, 70°, 75°, 80°, 85°, 90°, 95°, 100°, 105°, 110°, 115°, 120°, etc.

In some other embodiments of the present disclosure, the cross section of each of the at least one protrusion 1012 in the extending direction has a shape of a triangle. An angle of the piercing end is less than or equal to 120° in the cross section of each of the at least one protrusion 1012 perpendicular to the extension direction. That is, each of the at least one protrusion 1012 may be in a shape of a pyramid prism, or may also be in a shape of a cone.

For example, in the cross section of the piercing segment 10122 in the extending direction of the at least one protrusion 1012, an angle of the piercing end may be 5°, 10°, 15°, 20°, 25°, 30°, 35°,40°,45°, 50°, 55°, 60°, 65°, 70°, 75°, 80°, 85°, 90°, 95°, 100°, 105°, 110°, 115°, 120°, etc.

In some yet other embodiments of the present disclosure, when the cross section of the piercing segment 10122 perpendicular to the extending direction has a shape of a trapezoide, a ratio of an upper side to a lower side of the cross section is less than or equal to 0.6. That is, the piercing segment 10122 may be a frustum, a prism, or a truncated cone. The lower side of each of the at least one protrusion 1012 is connected to the connection plate 101, and the upper side of each of the at least one protrusion 1012 is shorter than the lower side of each of the at least one protrusion 1012. In this way, the piercing effect of the at least one protrusion 1012 can be ensured. In addition, the ratio of the upper side to the lower side of the cross section of each of the at least one protrusion 1012 is less than or equal to 0.6, and therefore the piercing effect of the at least one protrusion 1012 is further ensured. Thus, the difficulty of welding the tabs 20211 and the connection plate 101 can be further reduced.

For example, the ratio of the upper side to the lower side of the cross section of the protrusion 1012 may be 0.6, 0.55, 0.5, 0.45, 0.4, 0.35, 0.3, 0.25, 0.2, 0.15, 0.1, etc.

In one embodiment, a length of the upper side of the cross section of each of the at least one protrusion 1012 is less than or equal to 3 mm, and a length of the lower side of the cross section of each of the at least one protrusion 1012 is less than or equal to 5 mm. For example, the length of the upper side of the cross section of each of the at least one protrusion 1012 may be 0.1 mm, 0.2 mm, 0.4 mm, 0.6 mm, 0.8 mm, 1.0 mm, 1.2 mm, 1.4 mm, 1.6 mm, 1.8 mm, 2.0 mm, 2.2 mm, 2.4 mm, 2.6 mm, 2.8 mm, 3.0 mm, etc., and the length of the lower side of the cross section of each of the at least one protrusion 1012 may be 0.2 mm, 0.4 mm, 0.6 mm, 0.8 mm, 1.0 mm, 1.2 mm, 1.4 mm, 1.6 mm, 1.8 mm, 2.0 mm, 2.2 mm, 2.4 mm, 2.6 mm, 2.8 mm, 3.0 mm, 3.2 mm, 3.4 mm, 3.6 mm, 3.8 mm, 4.0 mm, 4.2 mm, 4.4 mm, 4.6 mm, 4.8 mm, 5.0 mm, etc.

In some embodiments, the plurality of protrusions 1012 are connected to the plurality of layers of tabs 20211 through the ultrasonic welding.

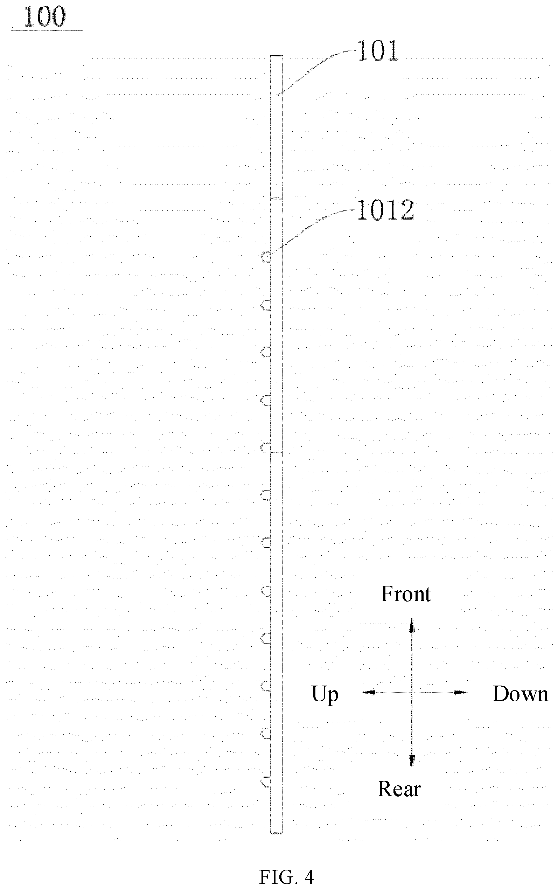

In some embodiments of the present disclosure, cross sectional areas of the piercing segment 10122 gradually decrease in the height direction of each of the at least one protrusion 1012, and an apex angle of the piercing segment 10122 is less than or equal to 120°. Referring to FIG. 4 and FIG. 5, in the up-down direction of each of the at least one protrusion 1012, the cross sectional areas of the piercing segment 10122 gradually decrease from bottom to top. A cross sectional area of the bottom surface of the piercing segment 10122 is the largest, and a cross sectional area of the top surface of the piercing segment 10122 is the smallest. Therefore, the at least one protrusion 1012 can easily pierce the plurality of layers of tabs 20211, reducing the difficulty of welding the tabs 20211 and the connection plate 101. The welding duration between tabs 20211 and connection plate 101 is reduced, and the production efficiency is improved.

For example, the apex angle of the piercing segment 10122 may be 5°, 10°, 15°, 20°, 25°, 30°, 35°,40°,45°, 50°, 55°, 60°, 65°, 70°, 75°, 80°, 85°, 90°, 95°, 100°, 105°, 110°, 115°, 120°, etc.

Further, a height of the piercing segment 10122 is less than or equal to 2 mm in the height direction of each of the at least one protrusion 1012. For example, the height of the piercing segment 10122 may be 2 mm, 1.8 mm, 1.6 mm, 1.4 mm, 1.2 mm, 1 mm, 0.8 mm, 0.6 mm, 0.4 mm, 0.2 mm, etc. Therefore, the piercing effect of the at least one protrusion 1012 is ensured, and the difficulty of welding tabs 20211 and connection plate 101 is reduced. The manufacture duration is reduced, and the welding efficiency is improved.

Furthermore, a height of the connection segment 10121 is less than or equal to 3 mm in the height direction of each of the at least one protrusion 1012. The height of the connection segment 10121 may be 3 mm, 2.8 mm, 2.6 mm, 2.4 mm, 2.2 mm, 2 mm, 1.8 mm, 1.6 mm, 1.4 mm, 1 mm, 0.8 mm, 0.6 mm, 0.4 mm, 0.2 mm, etc. Therefore, the connection strength between the tabs 20211 and the connection plate 101 is enhanced, and the tabs 20211 and the connection plate 101 are less likely to be separated from each other, which can improve the yield.

In some embodiments of the present disclosure, a smooth transition is formed between the connection segment 10121 and the piercing segment 10122. Due to the friction between tabs 20211 and the at least one protrusion 1012 in the welding process, the at least one protrusion 1012 with the smooth transition between the connection segment 10121 and the piercing segment 10122 cannot easily damage the tabs 20211. Therefore, the service life of the tabs 20211 is prolonged, and the yield of battery cell 1000 is ensured. Therefore, the safety and reliability of battery pack are improved.

A current collector assembly 200 according to an exemplary embodiment of the present disclosure will be described below with reference to FIG. 1 to FIG. 31.

Referring to FIG. 16, each of the at least one protrusion 1012 has an elongated shape. The current collector assembly 200 includes a current collector 202 and a conductive connection assembly 100. The at least one protrusion 1012 includes a plurality of protrusions 1012. The connection plate 101 is provided with the plurality of protrusions 1012 at an upper surface of the connection plate 101, and each of the plurality of protrusions 1012 extends on the upper surface of the connection plate 101 in the ultrasonic vibration direction. The thickness of the connection plate 101 is 0.8 mm, and the height of each of the plurality of protrusions 1012 is 0.6 mm. The spacing L2 between two adjacent protrusions 1012 is 2.4 mm. The height of the connection segment 10121 of the protrusion 1012 is 0.4 mm. The height of the piercing segment 10122 of each of the plurality of protrusions 1012 is 0.2 mm. The length L of each of the plurality of protrusions 1012 is 13 mm, and the width d of each of the plurality of protrusions 1012 is 0.6 mm. The apex angle of the piercing segment 10122 is 67°. The connection segment 10121 has constant cross sectional areas in the up-down direction, and the piercing segment 10122 has cross sectional areas gradually decreasing in the up-down direction. Each of the plurality of protrusions 1012 extends on the upper surface of the connection plate 101 along the straight line. The connection plate 101 and the plurality of protrusions 1012 are integrally formed. The tabs 20211 has three layers including a first conductive layer 202111, a second conductive layer 202112, and a support insulation layer 202113 from top to bottom. The protection plate 201 is arranged above the plurality of layers of tabs 20211, and the upper end of each of the at least one protrusion 1012 is connected to the protection plate 201.

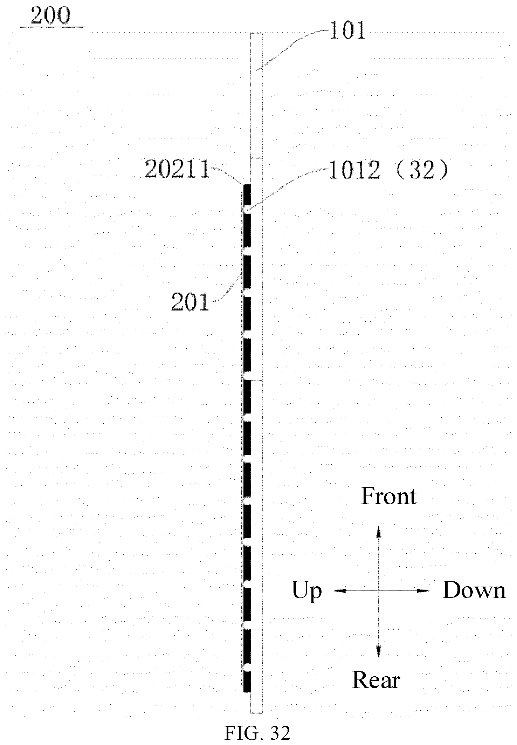

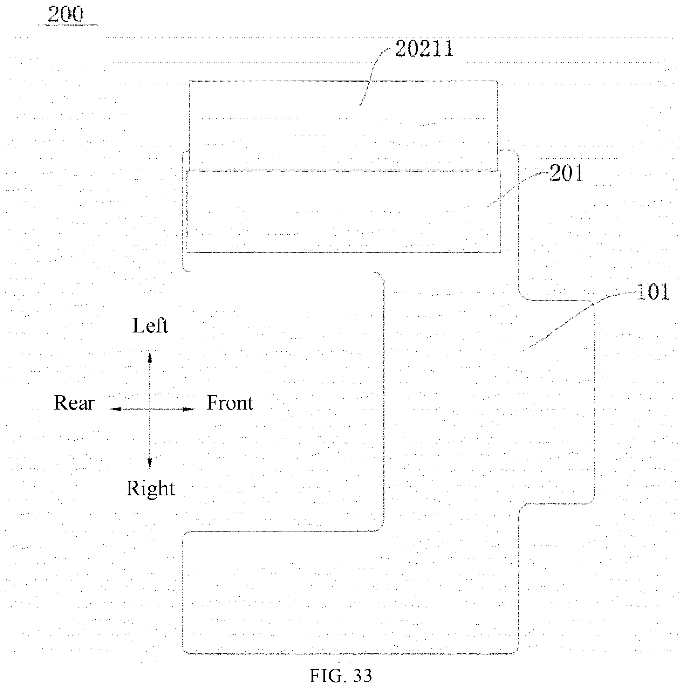

A current collector assembly 200 according to one embodiment of the present disclosure will be described below with reference to FIG. 1 to FIG. 35.

As shown in FIG. 1 to FIG. 35, the current collector assembly 200 according to one embodiment of the present disclosure includes a plurality of layers of tabs 20211, a protection plate 201, and a connection plate 101.

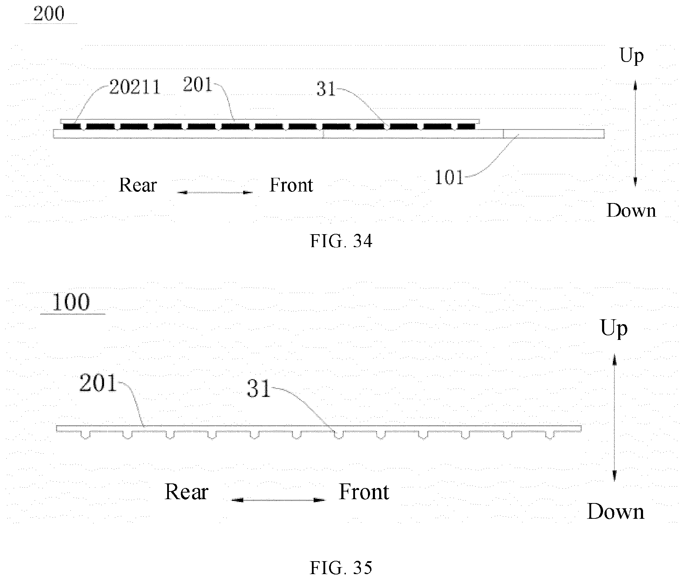

In some embodiments, the plurality of layers of tabs 20211 are stacked in the thickness direction of each of the tabs 20211. The at least one protrusion 1012 includes at least one first protrusion 31 and at least one second protrusion 32. The protection plate 201 is provided with the at least one first protrusion 31 (as shown in FIG. 34). The protection plate 201 is arranged at a side of the plurality of layers of tabs 20211 in the thickness direction. Each of the at least one first protrusion 31 penetrates the plurality of layers of tabs 20211, and is electrically connected to the plurality of layers of tabs 20211. The connection plate 101 is provided with the at least one second protrusion 32. The connection plate 101 is arranged at other side of the plurality of layers of tabs 20211 in the thickness direction. Each of the at least one second protrusion 32 penetrates the plurality of layers of tabs 20211, and is electrically connected to the plurality of layers of tabs 20211.

That is, the at least one first protrusion 31 is located at the protection plate 201, and the at least one second protrusion 32 is located at the connection plate 101. Each of the at least one first protrusion 31 and the at least one second protrusion 32 penetrates the plurality of layers of tabs 20211, and is electrically connected to the plurality of layers of tabs 20211. Each of the at least one first protrusion 31 penetrates the plurality of layers of tabs 20211, and is connected to the connection plate 101. Each of the at least one second protrusion 32 penetrates the plurality of layers of tabs 20211, and is connected to the protection plate 201. The protection plate 201 and the connection plate 101 are arranged at two sides of the plurality of layer of tabs 20211 in the thickness direction.

With the current collector assembly 200 of the present disclosure, since the protrusions 1012 is arranged at both the protection plate 201 and the connection plate 101, the connection strength between the tabs 20211 and the protrusions 1012 is further enhanced, and thus a stable connection can be provided. The piercing effect of the protrusions 1012 is ensured, and the contact areas between the protrusions 1012 and the tabs 20211 is increased. Reliability of the conductive connection is stable, and a failure rate is reduced, which can ensure yield rate of the battery cell 1000. In addition, use safety of the battery pack is ensured, which can avoid accidents.

In some embodiments of the present disclosure, a plurality of first protrusions 31 are provided. The plurality of first protrusions 31 are arranged at intervals in a plane where the protection plate 201 is located. In addition, a plurality of second protrusions 32 are provided. The plurality of second protrusions 32 are arranged at intervals in a plane where the connection plate 101 is located. In other words, the plurality of first protrusions 31 are arranged at intervals at a side surface of the protection plate 201 facing towards the connection plate 101. The plurality of second protrusions 32 are arranged at intervals at a side surface of the connection plate 101 facing towards the protection plate 201. The plurality of first protrusions 31 and the plurality of second protrusions 32 are arranged at the protection plate 201 and the connection plate 101, thereby ensuring the connection stability between the tabs 20211 and the plurality of protrusions 1012.

Further, the plurality of first protrusions 31 are arranged at the protection plate 201, and each of the plurality of first protrusions 31 is connected to the connection plate 101 by penetrating through the plurality of layers of tabs 20211. The plurality of first protrusions 31 and the protection plate 201 may be integrally formed. The plurality of second protrusions 32 are arranged at the connection plate 101, and each of the plurality of second protrusions 32 is connected to the protection plate 201 by penetrating the plurality of layers of tabs 20211. The plurality of second protrusions 32 and the connection plate 101 may be integrally formed. Therefore, the number of parts of the current collector assembly 200 is reduced, and the overall connection strength of the current collector assembly 200 is enhanced. The connection stability between the protrusions 1012 and the tabs 20211 is improved, and the defective rate of the current collector assembly 200 is reduced. Therefore, the service life of the current collector assembly 200 is prolonged.

In some embodiments, the at least one first protrusion 31 and the at least one second protrusion 32 are welded, bonded, plugged or snapped at the protection plate 201 and the connection plate 101.

As the ultrasonic welding has the fast welding speed, the high welding strength, the good sealing, the traditional welding/bonding process is replaced. The ultrasonic welding has the low costs, the pollution-free cleaning without damaging the soft connecting piece and the tabs 20211, the stable welding process, and the good conductivity after welding in which the resistivity is extremely low or nearly zero. In addition, the welding duration is short, and no flux, gas or solder is needed. No spark is generated in the welding process, and the welding process is environmental friendly and safe. Furthermore, each of the at least one first protrusion 31 and each of the at least one second protrusion 32 are welded at the protection plate 201 and the connection plate 101 through the ultrasonic welding. The ultrasonic vibration has a vibration frequency ranging from 15 KHz to 40 KHz, and an amplitude ranging from 5 µm to 100µm. The welding pressure of the ultrasonic vibration is greater than or equal to 20 N, and the welding duration is greater than or equal to 30 ms.

In some embodiments of the present disclosure, in a plane perpendicular to the thickness direction of each of the tabs 20211, one second protrusion 32 is arranged between at least one set of two adjacent first protrusions 31, or one first protrusion 31 is arranged between at least one set of two adjacent second protrusions 32. That is, in the plane perpendicular to the thickness direction of tab 20211, one second protrusion 32 may be arranged between a set of two first protrusions 31, or two second protrusions 32 may be arranged between a set of two first protrusions 31. One first protrusion 31 may be arranged between a set of two second protrusions 32, or two first protrusions 31 may be arranged between a set of two second protrusions 32, or the like. In other embodiments, a plurality of set of protrusions may be provided.

In some embodiments of the present disclosure, the plurality of first protrusions 31 and the plurality of second protrusions 32 are alternatively arranged in the plane perpendicular to the thickness direction of each of the tabs 20211. For example, one first protrusion 31 and one second protrusion 32 may be alternatively arranged. Two first protrusions 31 and two second protrusions 32 may be alternatively arranged. Three first protrusions 31 and three second protrusions 32 may be alternatively arranged, and so on, based on a predetermined regularity. In this way, the connection stability between tabs 20211 and protrusions 1012 can be ensured, and the reliability of the conductive connection can be improved. Therefore, the failure rate of battery cell 1000 can be reduced.

In some embodiments of the present disclosure, each of the plurality of first protrusions 31 is connected to the connection plate 101 by penetrating the plurality of layers of tabs 20211, and each of the plurality of second protrusions 32 is connected to the protection plate 201 by penetrating the plurality of layers of tabs 20211. That is, an upper end of each of the plurality of first protrusions 31 is connected to the protection plate 201, and a lower end of each of the plurality of first protrusions 31 is connected to the connection plate 101. An upper end of each of the plurality of second protrusions 32 is connected to the protection plate 201, and a lower end of each of the plurality of second protrusions 32 is connected to the connection plate 101. In this way, the plurality of first protrusions 31 and the plurality of second protrusions 32 are connected to the connection plate 101 and the protection plate 201 at the same time, which ensures the stable connection of the current collector assembly 200, thereby improving the yield of the battery cell 1000. This is economical and reliable.

In some embodiments of the present disclosure, the connection plate 101 has a first surface facing away from the tabs 20211 in a thickness direction of the connection plate 20211, and the protection plate 201 has a second surface facing away from the tabs 20211 in a thickness direction of the protection plate 201. Two ends of the at least one first protrusion 31 in the thickness direction of each of the tabs 20211 and two ends of the at least one second protrusion 32 in the thickness direction of each of the tabs 20211 are located at an inner side of the first surface and an inner side of the second surface. Briefly, the at least one first protrusion 31 and the at least one second protrusion 32 are located between the connection plate 101 and the protection plate 201.

In some embodiments of the present disclosure, each of the at least one first protrusion 31 or each of the at least one second protrusion 32 includes a connection segment 10121 and a piercing segment 10122 connected to each other in a height direction. The connection segment 10121 has an end connected to the connection plate 101 or the protection plate 202 and another end connected to the piercing segment 10122. The piercing segment 10122 is configured to pierce the plurality of layers of tabs 20211. That is, each of the at least one first protrusion 31 may include the connection segment 10121 and the piercing segment 10122 connected to each other in the height direction, or each of the at least one second protrusion 32 may include the connection segment 10121 and the piercing segment 10122 connected to each other in the height direction. Or, each of the at least one first protrusion 31 and each of the at least one second protrusion 32 may each include the connection segment 10121 and the piercing segment 10122 connected to each other in the height direction.

When each of the at least one first protrusion 31 includes the connection segment 10121 and the piercing segment 10122 connected to each other in the height direction, the lower end of each of the at least one first protrusion 31 is located in the upper surface of the connection plate 101. An upper part of each of the at least one first protrusion 31 is the connection segment 10121, and a lower part of each of the at least one first protrusion 31 is the piercing segment 10122. The connection segment 10121 is connected to the protection plate 201. The piercing segment 10122 is connected to the lower end of the connection segment 10121, and has a piercing end for piercing the plurality of layers of tabs 20211.

When each of the at least one second protrusion 32 includes the connection segment 10121 and the piercing segment 10122 connected to each other in the height direction, the upper end of each of the at least one second protrusion 32 is located in the lower surface of the protection plate 201. A lower part of each of the at least one second protrusion 32 is the connection segment 10121, and an upper part of each of the at least one second protrusion 32 is the piercing segment 10122. The connection segment 10121 is connected to the connection plate 101. The piercing segment 10122 is connected to the upper end of the connection segment 10121, and has a piercing end for piercing the plurality of layers of tabs 20211.

A current collector assembly 200 according to an exemplary embodiment of the present disclosure will be described below with reference to FIG. 1 to FIG. 35.

In a further embodiment, each of the at least one first protrusion 31 and each of the at least one second protrusion 32 each have an elongated shape. The current collector assembly 200 includes a plurality of layers of tabs 20211, a protection plate 201, and a connection plate 101. The protection plate 201 is provided with the at least one first protrusion 31, and the connection plate 101 is provided with the at least one second protrusion 32. The thickness of the connection plate 101 is 0.8 mm, and the length L of each of the at least one second protrusion 32 is 13 mm. The width d of each of the at least one second protrusion 32 is 0.6 mm, and the height of each of the at least one second protrusion 32 is 0.6 mm. The height of the connection segment 10121 of each of the at least one protrusion 1012 is 0.4 mm, and the height of the piercing segment 10122 of each of the at least one second protrusion 32 is 0.2 mm. The apex angle of the piercing segment 10122 is 67°. The connection segment 10121 has constant cross sectional areas in the up-down direction. The piercing segment 10122 has cross sectional areas gradually decreasing in the up-down direction. Each of the at least one protrusion 1012 extends on the upper surface of the connection plate 101 along the straight line. The connection plate 101 and the plurality of second protrusions 32 are integrally formed. The protection plate 201 and the plurality of first protrusions 31 are integrally formed. The tabs 20211 has three layers including a first conductive layer 202111, a second conductive layer 202112, and a support insulation layer 202113 from top to bottom. The protection plate 201 is arranged above the plurality of layers of tabs 20211. The plurality of first protrusions 31 and the plurality of second protrusions 32 are connected to the connection plate 101 and the protection plate 201, respectively.

Further, the current collector assembly 200 according to embodiments of the present disclosure includes a plurality of layers of tabs 20211, a protection plate 201, a connection plate 101, and at least one protrusion 1012. The plurality of layers of tabs 20211 is stacked together in the thickness direction of each of the tabs. The protection plate 201 is arranged at a side of the plurality of layers of tabs 20211 in the thickness direction of each of the tabs 20211. The connection plate 101 is arranged at the other side of the plurality of layers of tabs 20211 in the thickness direction of each of the tabs 20211. The at least one protrusion 1012 is arranged between the connection plate 101 and the protection plate 201. Each of the at least one protrusion 1012 penetrates the plurality of layers of tabs 20211, and is electrically connected to the plurality of layers of tabs 20211.

With the current collector assembly 200 according to the embodiments of the present disclosure, by arranging the at least one protrusion 1012, the difficulty of welding the tabs 20211 is reduced, and the welding process of the workers is simplified. The manufacturing duration is reduced with the lowered labor costs. The connection strength between the tabs 20211 and the connection plate 101 is enhanced, and the connection is stable. By arranging the protection plate 201, the tabs 20211 are protected from being damaged during the welding. By arranging the at least one protrusion 1012 and protection plate 201, not only the welding strength of tabs 20211 is ensured, but also the tabs 20211 are protected from being damaged. In addition, the overcurrent capacity of tabs 20211 can be ensured.

The battery cell 1000 according to one embodiment of the present disclosure includes the current collector assembly 200 according to any one of the above embodiments of the present disclosure.

With the battery cell 1000 of the embodiment of the present disclosure, by applying the current collector assembly 200 of the embodiment to the battery cell 1000, the difficulty of assembling the battery cell 1000 is reduced, the manufacturing duration of the battery cell 1000 is reduced with the lowered labor costs. Therefore, the reliability of the battery cell 1000 is ensured.

The battery pack according to one embodiment of the present disclosure includes the battery cell 1000 according to the above embodiment of the present disclosure.

In the battery pack of the embodiment of the present disclosure, by providing the battery cell 1000 of the above embodiment, the safety performance of the battery pack is improved, and the reliability of the battery pack is ensured, which can avoid an occurrence of danger.

In descriptions of the present disclosure, it should be understood that the orientation or the position indicated by terms such as "center", "longitudinal", "lateral", "length", "width", "thickness", "over", "below", "front", "rear", "left", "right", "vertical", "horizontal", "top", "bottom", "inner", "outer", "clockwise", "anti-clockwise", "axial", "radial", and "circumferential" should be construed to refer to the orientation and the position as shown in the drawings in discussion, and is only for the convenience of describing the present disclosure and simplifying the description, rather than indicating or implying that the pointed device or element must have a specific orientation, or be constructed and operated in a specific orientation, and therefore cannot be understood as a limitation of the present disclosure.

In addition, terms "first" and "second" are only used for descriptive purposes, and cannot be understood as indicating or implying relative importance or implicitly indicating the number of the indicated technical features. Therefore, the features associated with "first" and "second" may explicitly or implicitly include at least one of the features. In the description of the present disclosure, "plurality" means at least two, unless otherwise specifically defined.

In the present disclosure, unless otherwise clearly specified and limited, terms such as "install", "connect", "connect to", "fix" and the like should be understood in a broad sense. For example, it may be a fixed connection or a detachable connection or connection as one piece; mechanical connection or electrical connection; direct connection or indirect connection through an intermediate; internal communication of two components or the interaction relationship between two components, unless otherwise clearly limited. For those skilled in the art, the specific meaning of the above-mentioned terms in the present disclosure can be understood according to specific circumstances.

In descriptions of the present disclosure, descriptions with reference to the terms "an embodiment", "some embodiments", "examples", "specific examples", or "some examples" etc., mean that specific features, structure, materials, or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner.

Although embodiments of the present disclosure have been shown and described above, it should be understood for those of ordinary skill in the art that various changes, modifications, replacements, and variations can be made to the above embodiments without departing from the scope of the present disclosure. The scope of the present disclosure shall be defined by the claims as appended and their equivalents.

## Claims

1. A current collector assembly, comprising:
a plurality of layers of tabs stacked in a thickness direction of each of the tabs;
a protection plate arranged at a side of the plurality of layers of tabs in the thickness direction of each of the tabs;
a connection plate arranged at another side of the plurality of layers of tabs in the thickness direction of each of the tabs; and
at least one protrusion arranged between the connection plate and the protection plate, each of the at least one protrusion penetrating and being electrically connected to the plurality of layers of tabs.

2. The current collector assembly according to claim 1, wherein each of the at least one protrusion has an end connected to the connection plate and another end located inside of an outer side surface of the protection plate.

3. The current collector assembly according to claim 2, wherein the other end of each of the at least one protrusion is connected to the protection plate.

4. The current collector assembly according to claim 2 or 3, wherein the other end of each of the at least one protrusion is fixed to an inner side surface of the protection plate.

5. The current collector assembly according to any one of claims 1 to 4, wherein each of the at least one protrusion is arranged at the connection plate, and is connected to the protection plate by penetrating the plurality of layers of tabs.

6. The current collector assembly according to claim 1 or 2, wherein each of the at least one protrusion is arranged at the protection plate, and is connected to the connection plate by penetrating the plurality of layers of tabs.

7. The current collector assembly according to any one of claims 1 to 6, wherein each of the at least one protrusion has a height ranging from 0.1 mm to 3 mm in the thickness direction of each of the tabs.

8. The current collector assembly according to any one of claims 1 to 7, wherein the at least one protrusion comprises a plurality of protrusions arranged in a matrix pattern.

9. The current collector assembly according to any one of claims 1 to 8, wherein each of the at least one protrusion extends along a straight and/or curved line in a plane perpendicular to the thickness direction of each of the tabs.

10. The current collector assembly according to any one of claims 1 to 9, wherein the plurality of protrusions are connected to the plurality of layers of tabs through ultrasonic welding, and are arranged more densely in an ultrasonic vibration direction than in other directions.

11. The current collector assembly according to any one of claims 1 to 10, wherein each of the tabs comprises:
a support insulation layer; and
a first conductive layer and a second conductive layer that cover two side surfaces of the support insulation layer in a thickness direction of the support insulation layer, respectively.

12. The current collector assembly according to claim 1, further comprising:
a conductive connection assembly comprising the protection plate and the connection plate,
wherein the connection plate and/or the protection plate are provided with the at least one protrusion, the at least one protrusion piercing the plurality of layers of tabs through high frequency vibration and being electrically connected to the plurality of layers of tabs, the high frequency vibration having a frequency ranging from 15 KHz to 40 KHz.

13. The current collector assembly according to claim 12, wherein the high frequency vibration has an amplitude ranging from 5 µm to 100 µm.

14. The current collector assembly according to claim 12 or 13, wherein each of the at least one protrusion extends from a surface of the connection plate and/or the protection plate, and a high frequency vibration direction is parallel to an extending direction of each of the at least one protrusion.

15. The current collector assembly according to any one of claims 12 to 14, wherein the high frequency vibration is generated through ultrasonic welding.

16. The current collector assembly according to any one of claims 12 to 15, wherein the connection plate is provided with the at least one protrusion, each of the at least one protrusion having an end connected to the connection plate and another end connected to the protection plate, and the at least one protrusion that is arranged at the connection plate piercing the plurality of layers of tabs through the high frequency vibration and being electrically connected to the plurality of layers of tabs.

17. The current collector assembly according to claim 16, wherein the other end of each of the at least one protrusion is fixed to an inner side surface of the protection plate or arranged in the protection plate through the ultrasonic welding.

18. The current collector assembly according to any one of claims 12 to 15, wherein the protection plate is provided with the at least one protrusion, and the at least one protrusion arranged at the protection plate is connected to the connection plate by piercing the plurality of layers of tabs through the high frequency vibration.

19. The current collector assembly according to any one of claims 12 to 18, wherein the at least one protrusion comprises a plurality of protrusions arranged in a matrix pattern, and wherein the connection plate and/or the protection plate are provided with the plurality of protrusions.

20. The current collector assembly according to claim 19, wherein the plurality of protrusions are arranged more densely in the high frequency vibration direction than in directions other than the high frequency vibration direction.

21. The current collector assembly according to claim 19, wherein the plurality of protrusions extend in the high frequency vibration direction and are arranged at intervals in a direction perpendicular to the high frequency vibration direction.

22. The current collector assembly according to claim 1, further comprising an conductive connection assembly comprising the protection plate and the connection plate, wherein the connection plate and/or the protection plate are provided with the at least one protrusion, each of the at least one protrusion comprising a connection segment and a piercing segment connected to each other in a height direction of each of the at least one protrusion, the connection segment having an end connected to the connection plate or the protection plate and another end connected to the piercing segment, the piercing segment being configured to pierce the plurality of layers of tabs, and each of the at least one protrusion being electrically connected to the plurality of layers of tabs.

23. The current collector assembly according to claim 22, wherein the connection segment has constant cross sectional areas, and is electrically connected to the plurality of layers of tabs.

24. The current collector assembly according to claim 22 or 23, wherein the piercing segment has a shape of a cone or a truncated cone.

25. The current collector assembly according to any one of claims 22 to 24, wherein each of the at least one protrusion extends on the side surface of the connection plate and/or the protection plate along a straight and/or curved line, and a cross section of the piercing segment perpendicular to an extending direction of each of the at least one protrusion has a shape of a triangle or a trapezoid shape.

26. The current collector assembly according to any one of claims 22 to 25, wherein cross sectional areas of the piercing segment gradually decrease in the height direction of each of the at least one protrusion, and an apex angle of the piercing segment is less than or equal to 120°.

27. The current collector assembly according to any one of claims 22 to 26, wherein in the height direction of each of the at least one protrusion, a height of the piercing segment is less than or equal to 2 mm.

28. The current collector assembly according to any one of claims 22 to 27, wherein a smooth transition is formed between the connection segment and the piercing segment.

29. The current collector assembly according to any one of claims 22 to 28, wherein the at least one protrusion comprises a plurality of protrusions arranged in a matrix pattern, and wherein the connection plate and/or the protection plate are provided with the plurality of protrusions.

30. The current collector assembly according to claim 1, wherein the at least one protrusion comprises:
at least one first protrusion at the protection plate, the at least one first protrusion penetrating and being electrically connected to the plurality of layers of tabs; and
at least one second protrusion at the connection plate, the at least one second protrusion penetrating and being electrically connected to the plurality of layers of tabs.

31. The current collector assembly according to claim 30, wherein:
the protection plate is provided with a plurality of first protrusions arranged at intervals in a plane where the protection plate is located; and
the connection plate is provided with a plurality of second protrusions arranged at intervals in a plane where the connection plate is located.

32. The current collector assembly according to claim 31, wherein in a plane perpendicular to the thickness direction of each of the tabs, one second protrusion is arranged between at least one set of two adjacent first protrusions, or one first protrusion is arranged between at least one set of two adjacent second protrusions.

33. The current collector assembly according to claim 32, wherein the plurality of first protrusions and the plurality of second protrusions are alternatively arranged in the plane perpendicular to the thickness direction of each of the tabs.

34. The current collector assembly according to any one of claims 30 to 33, wherein the at least one first protrusion is connected to the connection plate by penetrating the plurality of layers of tabs, and the at least one second protrusion is connected to the protection plate by penetrating the plurality of layers of tabs.

35. The current collector assembly according to claim 34, wherein:
the connection plate has a first surface facing away from the tabs in a thickness direction of the connection plate;
the protection plate has a second surface facing away from the tabs in a thickness direction of the protection plate; and
two ends of each of the at least one first protrusion in the thickness direction of each of the tabs and two ends of each of the at least one second protrusion in the thickness direction of each of the tabs are located at an inner side of the first surface and an inner side of the second surface.

36. The current collector assembly according to any one of claims 30 to 35, wherein each of the at least one first protrusion or each of the at least one second protrusion comprises a connection segment and a piercing segment connected to each other in a height direction of each of the at least one protrusion, the connection segment having an end connected to the connection plate or the protection plate and another end connected to the piercing segment, and the piercing segment being configured to pierce the plurality of layers of tabs.

37. The current collector assembly according to claim 36, wherein the connection segment has constant cross sectional areas and is electrically connected to the plurality of layers of tabs.

38. The current collector assembly according to any one of claims 1 to 37, further comprising an electrode plate, the electrode plate comprising a current collector and a plurality of tabs that are stacked together,
wherein the electrode plate comprises a support insulation layer, and a first conductive layer and a second conductive layer that cover two side surfaces of the support insulation layer in a thickness direction of the support insulation layer.

39. A battery cell, comprising the current collector assembly according to any one of claims 1 to 38.

40. A battery pack, comprising the battery cell according to claim 39.
